(19) Europäisches Patentamt
European Patent Office
Office européen des brevets

(11) EP 2 515 431 B1

(12) EUROPEAN PATENT SPECIFICATION

(45) Date of publication and mention
of the grant of the patent:
**11.04.2018 Bulletin 2018/15**

(51) Int Cl.:
**H02P 21/04** *(2006.01)*    **H02P 21/14** *(2016.01)*

(21) Application number: **12154826.7**

(22) Date of filing: **10.02.2012**

(54) **Electrical power conversion device and electric motor control system**

Leistungswandlungsvorrichtung und Elektromotorsteuerungssystem

Dispositif de conversion d'alimentation électrique et système de contrôle de moteur électrique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2011 JP 2011093173**

(43) Date of publication of application:
**24.10.2012 Bulletin 2012/43**

(73) Proprietor: **Hitachi Industrial Equipment Systems Co., Ltd.**
**Tokyo 101-0022 (JP)**

(72) Inventors:
• **Arakawa, Yoichiro**
  **Tokyo, 100-8220 (JP)**
• **Tobari, Kazuaki**
  **Tokyo, 100-8220 (JP)**
• **Kaneko, Daigo**
  **Tokyo, 100-8220 (JP)**
• **Iwaji, Yoshitaka**
  **Tokyo, 100-8220 (JP)**
• **Onuma, Yusaku**
  **Chiba, 275-8611 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**EP-A1- 1 492 224      JP-A- 2008 125 260**
**JP-A- 2010 154 598**

EP 2 515 431 B1

**Description**

The present invention relates to an electrical power conversion device and to an electric motor control system.

In a drive system for an AC electric motor such as a synchronous motor or an induction motor or the like (hereinafter simply termed an "electric motor"), an electrical power conversion device as represented by a voltage type inverter is very often employed as an electric motor control device that drives the electric motor by converting DC electrical power into AC electrical power. In order to enhance the performance of such an electrical power conversion device for driving an electric motor, it is necessary to detect with high accuracy the magnetic pole position of the rotor of the electric motor and its rotational speed and so on, since this constitutes control information for the motor. With a recent type of electrical power conversion device, the actual rotational state of the rotor is not measured by any position sensor or a speed detector or the like fitted to the electric motor; instead, a control method is employed in which estimation of the control values is performed at high accuracy by estimating the rotational state of the rotor from information about the back electromotive voltage generated by the electric motor.

However since the back electromotive voltage becomes extremely small in the low speed region where the rotational speed of the electric motor is very low, accordingly it is difficult at this time to apply the above described electric motor control method in which the rotational state of the rotor is estimated from the back electromotive voltage information. Thus, at low speed, a method is employed in which the saliency or the magnetic flux saturation characteristic is used for estimating the control amount.

In Japanese Patent 3,312,472 there is described a magnetic pole position detection device that performs estimation of the magnetic pole position that represents the rotational state of the rotor of, in particular, by using the saliency of a permanent magnet type synchronous electric motor. With this magnetic pole position detection device, an alternating magnetic field is generated along the magnetic pole axis of the electric motor (i.e. along the dc axis), a pulsating current (or voltage) generated thereby along the estimated torque axis orthogonal to this dc axis (i.e. along the qc axis) is detected, and the estimated internal magnetic pole position of the electric motor is calculated on the basis of this pulsating current (or voltage). With this technique, advantage is taken of the characteristic that, if an error is present between the actual magnetic pole axis and the estimated magnetic pole axis, then interference term of an inductance from the dc axis to the qc axis appears. In concrete terms, a high frequency voltage or current is superposed to the electric motor, the inductance is measured iteratively by detecting the degree of fluctuation of the current or the voltage that is generated due to the superposition, and the phase of this secondary magnetic flux is estimated as being a control value.

In Japanese Laid-Open Patent Publication 2002-78392 there is described a method for estimating and calculating the magnetic pole position that represents the rotational state of the rotor by taking advantage of the magnetic saturation characteristic of the electric motor. With this calculation method, the magnetic pole position is estimated and calculated on the basis of the magnitude of the current that is generated by applying voltage to the electric motor in some direction.

Moreover in Japanese Laid-Open Patent Publication 2010-154597, in a method in which a high frequency current command is superimposed and the inductance is iteratively measured from the fluctuations of the high frequency voltage that is generated by performing current control, it is described to change this current command value during low torque and during high torque.

According to these methods, it is possible to estimate the operational information for the electric motor with good accuracy without using any sensor for detecting the rotational state of the rotor. Due to this, it is possible to eliminate the cost of a sensor and of the cabling for outputting the detection signal of the sensor and so on, and it is also possible to eliminate the cost of the labor for installing such components. Furthermore, it is also possible to suppress inappropriate behavior during operation of the electric motor such as a failure in the sensor, noise that originates in errors in fitting of the sensor or that originates in the surrounding environment or the like.

A control method for an electric motor like the techniques described in Japanese Patent 3,312,472 and Japanese Laid-Open Patent Publication 2002-78392 in which the high frequency current is generated by adding a high frequency voltage to the voltage command is particularly effective if the amplitude of the high frequency voltage that is thus superposed is constant, or if the high frequency current that is generated is within a comparatively small range. However, since the inductance with respect to the high frequency voltage decreases due to the phenomenon of magnetic flux saturation when the current in the electric motor increases during high torque, accordingly there is a tendency for the amplitude of the high frequency current to increase at this time. Due to this, when a high frequency voltage is added to the voltage command during high torque operation so that a high frequency current is generated, sometimes the problem occurs that this high frequency current undesirably exceeds a predetermined limit current value, and that sometimes due to this effect it becomes impossible to sustain the operation of the electric motor.

On the other hand, the technique described in Japanese Laid-Open Patent Publication 2010-154597 is a method in which current control is performed by adding a high frequency current command to the current command, and problems like those described above do not occur, since the high frequency current amplitude is given as a command value.

However, with a control method for an electric motor in which a high frequency current command is added to the current command in this manner, the response speed of detection of the magnetic pole position is limited, because it is not possible to raise the frequency of the alternating signal that is superimposed to higher than the response speed of the current control system. Due to this, in the case of fluctuation of the rotational state of the electric motor due to shock disturbance or the like, in some cases it may happen that it is difficult to detect the magnetic pole position with good accuracy. Moreover, the problem may also sometimes occur that the frequency of the electromagnetic noise generated by the superimposition of high frequency may become as low as the range that can be heard by the human ear, so that acoustic noise may be generated.

Further, JP 2010/154598 A describes a sensorless motor controller that include a magnetic pole position estimating means, which estimates the position of a magnetic pole in the rotor of a motor by superposing high frequency voltages on the motor, without using a sensor which detects the position of a magnetic pole in the motor that has a rotor having saliency.

JP 2008/125260 A describes a high-frequency voltage setting section that superimposes a high-frequency signal on an output signal of an inverter. A high-frequency current detecting section extracts current signals as high-frequency signals to be actually propagating through an electric motor at this time, A position detecting section calculates a temporary rotation angle so that a phase difference in two signals becomes zero. A position correcting section corrects the temporary rotation angle.

EP 1492 224 A1 describes a high frequency generator that superposes a high frequency signal on an estimated magnetic flux. A magnetic flux observer estimates the position of magnetic flux. An error signal at flux position is extracted from voltage/current sense signal. A pair of adaptive adjusters adaptively adjust error signal on high frequency superposition side and flux observer side. A mixer selects the adjusters according to the speed.

The object underlying the invention, which is solved by the invention according to claim 1, is to overcome the above-described problems of the prior art. The dependent claims describe further preferred developments of the invention.

According to the 1st aspect of the present invention, an electrical power conversion device comprises: an electrical power conversion means for converting DC electrical power into AC electrical power and/or supplying the AC electrical power to an AC electric motor; a voltage output means for superposing, on a fundamental voltage command value for operating the AC electric motor corresponding to a predetermined operating frequency, an alternating voltage at high frequency that changes cyclically at a predetermined frequency higher than the predetermined operating frequency, and/or for outputting a result of the superposing to the electrical power conversion means as a voltage command value for commanding a voltage of the AC electrical power; a current detection means for detecting a current of the AC electrical power; a high frequency component extraction means for extracting from the current of the AC electrical power detected by the current detection means, as a high frequency current component, an amount of change due to the alternating voltage of a fundamental wave current component

corresponding to the fundamental voltage command value; a norm calculation means for obtaining a high frequency current norm that represents a magnitude of the high frequency current component extracted by the high frequency component extraction means; and/or an superposed voltage amplitude adjustment means for obtaining a superposed voltage amplitude command value for adjusting an amplitude of the alternating voltage based on the high frequency current norm obtained by the norm calculation means, and/or for outputting the superposed voltage amplitude command value to the voltage output means.

According to the 2nd aspect of the present invention, in the electrical power conversion device according to the 1st aspect, it is preferred that the electrical power conversion device further comprises: an axial deviation reference amount calculation means for obtaining an axial deviation reference amount corresponding to a magnetic pole position of the AC electric motor based on the high frequency current component that has been extracted by the high frequency component extraction means; and an estimation means for estimating the magnetic pole position of the AC electric motor based on the axial deviation reference amount that has been obtained by the axial deviation reference amount calculation means.

According to the 3rd aspect of the present invention, in the electrical power conversion device according to the 1 st or the 2nd aspect, it is preferred that the electrical power conversion device further comprises: a fundamental wave component extraction means for extracting the fundamental wave current component from the current of the AC electrical power detected by the current detection means; a current command generation means for generating a first current command value and a second current command value that respectively correspond to an excitation current component and to a torque current component of the current of the AC electrical power supplied by the electrical power conversion means to the AC electric motor; and a vector calculation means for calculating, based on the fundamental wave current component extracted by the fundamental wave component extraction means and the first current command value and the second current command value generated by the current command generation means, the fundamental voltage command value at a predetermined control response speed corresponding to the predetermined operating frequency, and for outputting the fundamental voltage command value to the voltage output means.

According to the 4th aspect of the present invention, in the electrical power conversion device according to the 3rd aspect, it is preferred that the electrical power conversion device further comprises: a high frequency current norm command generation means for outputting a high frequency current norm command value for adjusting the superposed voltage amplitude command value based on at least one among: the fundamental wave current component that is an excitation current component; the fundamental wave current component that is a torque current component; a norm of a fundamental wave current vector represented by the fundamental wave current component that is the excitation current component and by the fundamental wave current component that is the torque current component; the first current command value; the second current command value; and a norm of a current command vector represented by the first current command value and by the second current command value. The superposed voltage amplitude adjustment means obtains the superposed voltage amplitude command value so that the high frequency current norm agrees with the high frequency current norm command value, and outputs the superposed voltage amplitude command value to the voltage output means.

According to the 5th aspect of the present invention, an electric motor control system comprises: an electrical power conversion device according to any one of the 1st through the 4th aspects; and/or the AC electric motor.

BRIEF DESCRIPTION OF THE DRAWINGS

Fig. 1 is a structural diagram of an electric motor control system according to a first embodiment of the present invention;
Fig. 2 is a figure showing a coordinate system and definitions of symbols that are used for control of the electric motor according to the present invention Fig. 3 is an internal structural diagram of a voltage output unit;
Fig. 4 is an internal structural diagram of a current component separation unit;
Fig. 5 is a figure showing examples of signal waveforms, for explanation of the operation of a current component separation unit;
Fig. 6 is a figure for explanation of the characteristic of an axial deviation reference amount;
Fig. 7 is an internal structural diagram of a phase adjustment unit;
Fig. 8 is an internal structural diagram of a high frequency current norm command generation unit;
Fig. 9 is an internal structural diagram of an superposed voltage amplitude adjustment unit;
Fig. 10 is a figure for explanation of characteristics of current and inductance;
Fig. 11 is a figure for explanation of the beneficial effects of the present invention;
Fig. 12 is a structural diagram of an electric motor control system according to a second embodiment of the present invention;
Fig. 13 is an internal structural diagram of a voltage output unit;
Fig. 14 is an internal structural diagram of a current component separation unit;
Fig. 15 is a structural diagram of an electric motor control system according to a third embodiment of the present invention;
Fig. 16 is an internal structural diagram of a phase adjustment unit; and
Fig. 17 is a structural diagram of an electric motor control system according to a fourth embodiment of the present invention.

DESCRIPTION OF THE PREFERRED EMBODIMENTS

In the following, first through fourth embodiments of the present invention will be explained in detail with reference to the drawings. It should be understood that, in the following explanation, the same reference numerals/symbols will be appended to structural elements that are common in the various figures, and explanation of those duplicated structural elements will be omitted.

- FIRST EMBODIMENT -

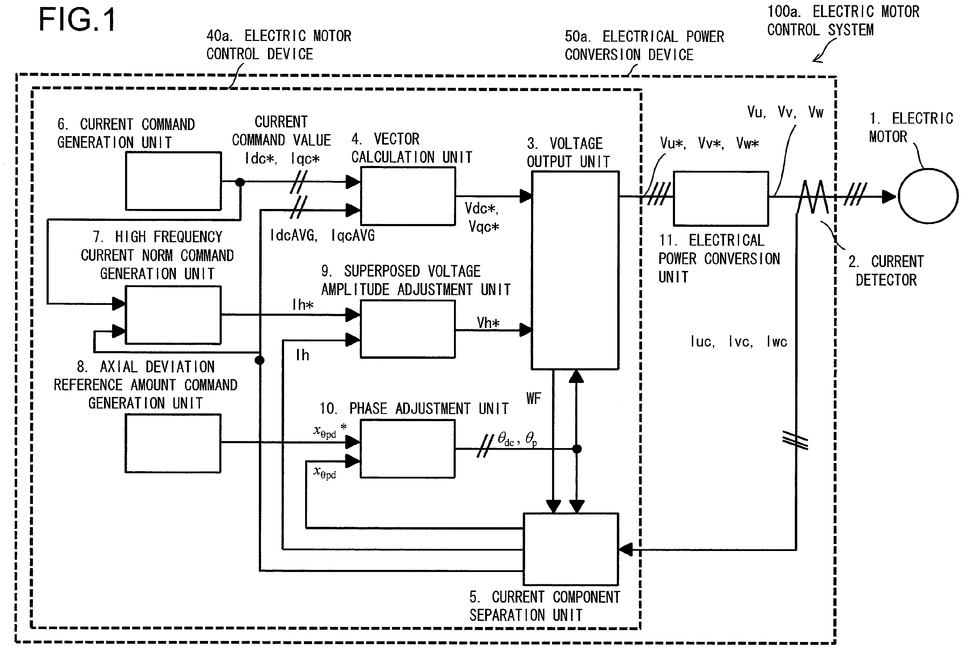

Fig. 1 is a structural diagram of an electric motor control system 100a according to the first embodiment of the present invention.

In Fig. 1, the electric motor control system 100a includes an electrical power conversion device 50a and an electric motor 1. The electrical power conversion device 50a includes an electric motor control device 40a, an electrical power conversion unit 11, and a current detection unit 2.

The current detection unit 2 detects the three-phase AC currents Iu, Iv, and Iw flowing from the electrical power conversion unit 11 to the electric motor 1, and outputs three-phase current signals Iuc, Ivc, and Iwc corresponding to the results of this detection to the motor control device 40a. This current detection unit 2 may, for example, be implemented with current sensors that use Hall elements.

On the basis of three-phase AC voltage command values Vu*, Vv*, and Vw* generated by the electric motor control device 40a, the electrical power conversion unit 11 converts DC electrical power from a DC power supply (not shown in the figures) to three-phase AC electrical power, and supplies this to the electric motor 1. At this time, three-phase AC voltages Vu, Vv, and Vw that are the voltages of the AC electrical power from the electrical power conversion unit 11 to the electric motor 1, and the three-phase AC currents Iu, Iv, and Iw that are the currents of this AC electrical power, are outputted. The electrical power conversion unit 11 may, for example, be implemented as an inverter that employs MOSFETs (Metal Oxide Semiconductor Field Effect Transistors) or IGBTs (Insulated Gate Bipolar Transistors) as switching elements.

The electric motor 1 is a three phase synchronous electric motor, and operates upon the three phase AC electrical power that is supplied from the electrical power conversion unit 11. This electric motor 1 includes a rotor, in which a plurality of permanent magnets are installed, and that rotates in the interior of a stator. It should be understood that the details of the structure of the electric motor 1 are omitted from the figures.

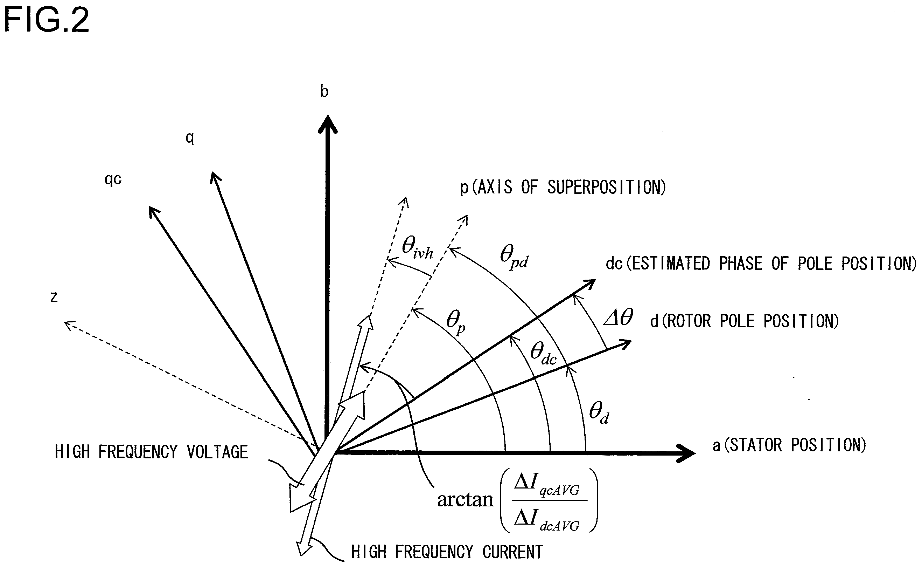

Fig. 2 is a figure showing a coordinate system and symbols that are used for control of the electric motor according to the present invention. In Fig. 2, an a-b axis coordinate system that is defined by an a axis and a b axis is a stator coordinate system for specifying the position of the stator, and generally the a axis is defined with the u phase winding phase of the electric motor 1 taken as a reference. On the other hand, a d-q coordinate system that is defined by a d axis and a q axis is a rotor coordinate system for specifying the magnetic pole position of the rotor, and this coordinate system rotates synchronously with the rotor of the electric motor 1. If the electric motor 1 is a permanent magnet type synchronous motor, then generally the d axis is defined with the phase of a permanent magnet assembled to the rotor taken as a reference. The d axis is also sometimes termed the magnetic pole axis. The dc axis and the qc axis specify the estimated phase of the magnetic pole position, and point in the respective directions of the d axis and the q axis that are estimated in the control performed by the electric motor control device 40a. A dc-qc axis coordinate system is defined by these coordinate axes. The dc axis is also sometimes termed the control axis. And a p-z axis coordinate system that is defined by a p axis and a z axis is a coordinate system for specification of a high frequency voltage that is superposed to the fundamental wave by a voltage command. It should be understood that, in each of the coordinate systems described above, the two coordinate axes that define the each of the coordinate systems are mutually orthogonal.

In the coordinate systems described above, the phases $\theta_d$, $\theta_{dc}$, and $\theta_p$ of the d axis, the dc axis, and the p axis are all shown in Fig. 2, with the a axis taken as a reference. Moreover, the deviations $\Delta\theta$ and $\theta_{pd}$ of the dc axis and the p axis with respect to the d axis are both shown in Fig. 2. Furthermore, the phase difference $\theta_{ivh}$, with respect to the p axis, of the high frequency current that is created by superposition of the high frequency voltage is also shown in Fig. 2.

In Fig. 1, the electric motor control device 40a includes a voltage output unit 3, a vector calculation unit 4, a current component separation unit 5, a current command generation unit 6, a high frequency current norm command generation unit 7, an axial deviation reference amount command generation unit 8, an superposed voltage amplitude adjustment unit 9, and a phase adjustment unit 10. It should be understood that this electric motor control device 40a includes a ROM (Read Only Memory), a RAM (Random Access Memory), a CPU (Central Processing Unit), a program, and so on. In other words, the various structural elements described above included in the electric motor control device 40a are implemented as processes that the CPU executes according to its program.

Next, the operation of this electric motor control device 40a will be explained. The principal object of the operation of this electric motor control device 40a is to make the excitation current component Id (i.e. the d axis current) and the torque current component Iq (i.e. the q axis current) of the current of the AC electrical power supplied by the electrical power conversion unit 11 to the electric motor 1 agree respectively with the desired current command values Idc* and Iqc*. In order to implement this, the electric motor control device 40a implements a current control system and a phase control system. The objective of the operation of the phase control system is to make the dc axis, i.e. the control axis, agree with the d axis that specifies the position of the rotor of the electric motor 1 (i.e. to synchronize them), and, in Fig. 1, it is principally the phase adjustment unit 10 that plays the role of this phase control system. On the other hand, the objective of the current control system is to make the detected dc axis current value Idc and the detected qc axis current value Iqc in the dc-qc axis coordinate system agree respectively with the desired current command values Idc* and Iqc*, and it is principally the vector calculation unit 4 that plays the role of this current control system.

First, the operation of the phase control system to synchronize the d axis and the dc axis by applying the high frequency voltage without using any type of position sensor will be explained in the following.

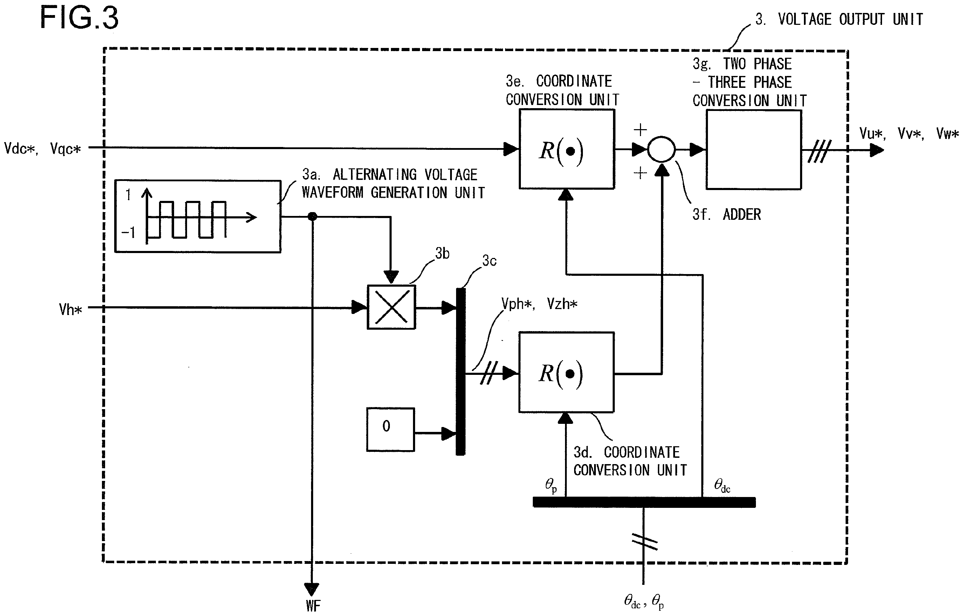

Fig. 3 shows the internal structure of the voltage output unit 3. As shown in Fig. 3, this voltage output unit 3 includes an alternating voltage waveform generation unit 3a, a multiplier 3b, a combiner 3c, coordinate conversion units 3d and 3e, an adder 3f, and a two phase - three phase conversion unit 3g. These structural elements are all implemented as processes that the CPU executes according to a program, in a similar manner to the various structural elements included in the electric motor control device 40a described above. It should be understood that, in this embodiment, it will be supposed that the waveform of the alternating voltage that is superposed in order for the three-phase AC voltage command values Vu*, Vv*, and Vw* to be outputted from the electric motor control device 40a is a square wave.

A high frequency square wave signal outputted from the alternating voltage waveform generation unit 3a is outputted to the multiplier 3b. The frequency of this square wave signal that changes cyclically is higher than the operating frequency at which the electric motor 1 operates, in other words is higher than the frequency of control of the electric motor 1 by the electric motor control device 40a. This square signal from the alternating voltage waveform generation unit 3a is also outputted to the exterior of the voltage output unit 3 as an alternating voltage waveform WF. This alternating voltage waveform WF is outputted from the voltage output unit 3 to the current component separation unit 5, as shown in Fig. 1.

The multiplier 3b generates a square wave signal of amplitude corresponding to the superposed voltage amplitude command value Vh* by multiplying the square wave signal that has been inputted to the multiplier 3 from the alternating voltage waveform generation unit 3 a by an superposed voltage amplitude command value Vh* that is inputted from the superposed voltage amplitude adjustment unit 9, as shown in Figs. 1 and 3. The square wave signal that has been generated in this manner is outputted to the combiner 3c.

The combiner 3c converts the square wave signal inputted from the multiplier 3b to an alternating voltage Vph* on the p axis and an alternating voltage Vzh* on the z axis, and outputs its vector quantity in the p-z axis coordinate system to the coordinate conversion unit 3d as an alternating voltage vector.

As shown in Figs. 1 and 3, on the basis of information about the phase $\theta_p$ on the p axis that is inputted from the phase adjustment unit 10, the coordinate conversion unit 3d converts the alternating voltage vector that has been inputted from the combiner 3c into a vector quantity in the a-b axis coordinate system. And the coordinate conversion unit outputs the alternating voltage vector after conversion to the adder 3f.

As shown in Figs. 1 and 3, on the basis of information about the phase $\theta_{dc}$ on the dc axis that is inputted from the phase adjustment unit 10, the coordinate conversion unit 3e converts a vector quantity specifying the fundamental wave vector of the voltage command inputted from the vector calculation unit 4 of Fig. 1 as will be described hereinafter from a vector quantity specified in the dc-qc axis coordinate system into a vector quantity specified in the a-b coordinate system. It should be understood that, before this conversion by the coordinate conversion unit 3e, this fundamental wave vector of the voltage command inputted from the vector calculation unit 4 is specified as a fundamental voltage command value Vdc* on the dc axis and a fundamental voltage command value Vqc* on the qc axis. The coordinate conversion unit 3e outputs this fundamental wave vector after conversion to the adder 3f.

The adder 3f adds the alternating voltage vector from the coordinate conversion unit 3d to the fundamental wave vector from the coordinate conversion unit 3e. By doing this, an alternating voltage at high frequency that corresponds to the alternating voltage vector is superposed to the fundamental voltage command values Vdc* and Vqc* that have been inputted from the vector calculation unit 4 as will be described hereinafter, in order to make the electric motor 1 operate according to a predetermined operating frequency. The vector after addition that specifies the result of this superposition by the adder 3f is outputted from the adder 3f to the two phase - three phase conversion unit 3g.

The two phase - three phase conversion unit 3g converts the vector after addition that has been inputted from the adder 3f into voltage values corresponding to each of the u phase, the v phase, and the w phase, and outputs them as three-phase AC voltage command values Vu*, Vv*, and Vw*. These three-phase AC voltage command values Vu*, Vv*, and Vw* are outputted to the electrical power conversion unit 11 as generated by the electric motor control device 40a, as previously described.

As has been explained above, in the generation of the three-phase AC voltage command values Vu*, Vv*, and Vw* by the voltage output unit 3 of the electric motor control device 40a, a high frequency square wave voltage is superposed. It should be understood that while, in this embodiment, the alternating voltage vector and the fundamental wave vector are added together by the adder 3f after each of them has been converted into a vector that is specified in the a-b axis coordinate system, it would also be acceptable to add them together after having converted each of them into a vector that is specified in some other coordinate system, such as for example the dc-qc axis coordinate system or a u-v-w coordinate system or the like.

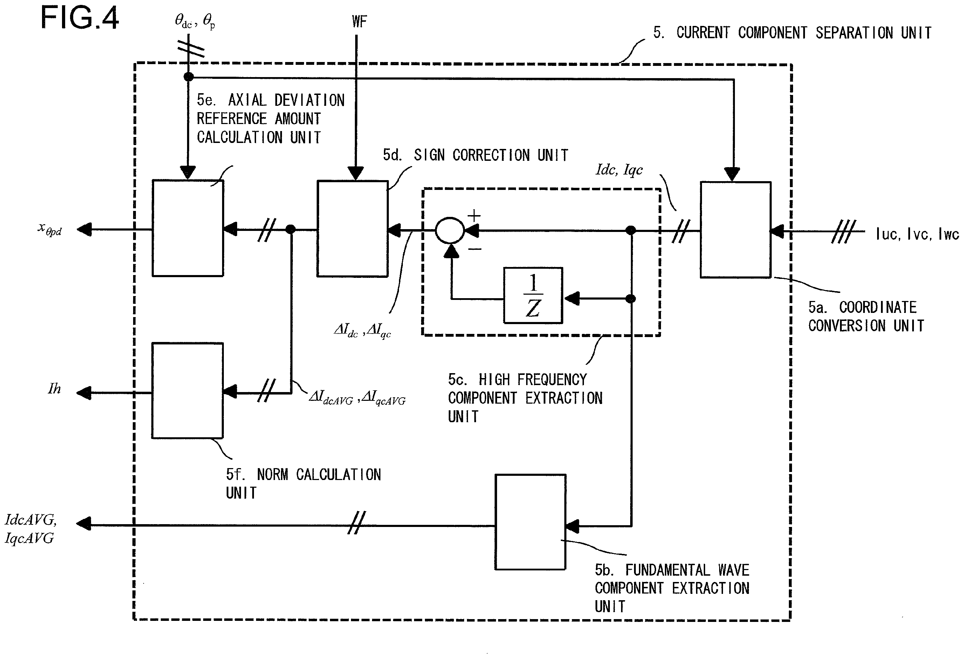

Fig. 4 shows the internal structure of the current component separation unit 5. As shown in Fig. 4, this current component separation unit 5 includes a coordinate conversion unit 5a, a fundamental wave component extraction unit 5b, a high frequency component extraction unit 5c, a sign correction unit 5d, an axial deviation reference amount calculation unit 5e, and a norm calculation unit 5f. These structural elements are all implemented as processes that the CPU executes according to a program, in a similar manner to the various structural elements included in the electric motor control device 40a and the voltage output unit 3 described above.

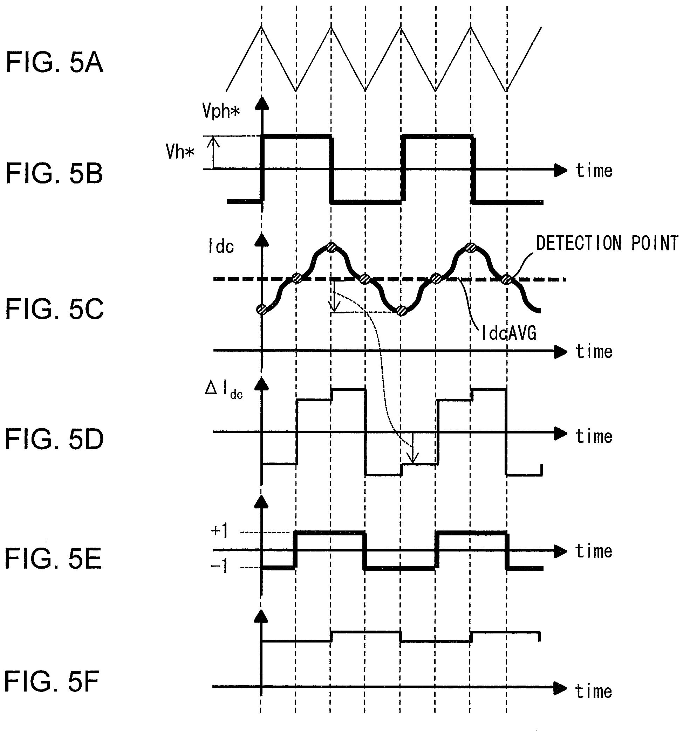

Figs. 5a through 5f are figures showing examples of the waveforms of the signals described above, for explanation of the operation of the current component separation unit 5. Each of the eight broken lines extending along the direction of the vertical axis in these figures indicates the same moment in each figure. In Fig. 5A, an example of the waveform of a triangular carrier that determines the period of the square wave signal generated by the alternating voltage waveform generation unit 3 a of the voltage output unit 3 of Fig. 3 is shown by a solid line. In Fig. 5B, an example of the waveform of the alternating voltage Vph* on the p axis described above outputted by the voltage output unit 3 from the combiner 3c to the coordinate conversion unit 3d is shown by a solid line. In Fig. 5C, along with an example of the waveform of the detected d axis current value Idc in the dc-qc axis coordinate system being shown by a solid line, an example of the waveform of the fundamental wave current component IdcAVG that is its average value is shown by a broken line along the direction of the time axis. The points of detection of the detected d axis current value Idc shown in Fig. 5C will be described hereinafter. In Fig. 5D, an example of the waveform of the differential value $\Delta I_{dc}$ between the detected d axis current value Idc and its value detected in the previous cycle is shown by a solid line. And in Fig. 5E an example of the waveform of the previously described alternating voltage waveform WF that is outputted from the alternating voltage waveform generation unit 3a in the voltage output unit 3 is shown by a solid line. Moreover, in Fig. 5F, an example of the waveform obtained by multiplying together the waveform of Fig. 5D and the waveform of Fig. 5E is shown. As will be described hereinafter, the sign correction unit 5d performs sign correction by multiplying together the waveform of Fig. 5D and the waveform of Fig. 5E.

In the electric motor control device 40a, as shown in Fig. 1, the three phase current signals Iuc, Ivc, and Iwc that have been outputted from the current detection unit 2 are inputted to the current component separation unit 5. These signals include fundamental wave current components that correspond to the fundamental voltage command values Vdc* and Vqc* from the vector calculation unit 4 (i.e. current components that correspond to the fundamental wave vector of the voltage command) and high frequency current components that correspond to the superposed voltage amplitude command value Vh* from the superposed voltage amplitude adjustment unit 9 (i.e. current components that correspond to the alternating voltage vector). In the control performed by the electric motor control device 40a, the fundamental wave current components are needed by the current control system, while the high frequency current components are needed by the phase control system. Due to this, by doing the following, operation is performed by the current component separation unit 5 to separate the three phase current signals Iuc, Ivc, and Iwc from the current detection unit 2 into fundamental wave current components and high frequency current components.

The operation of the current component separation unit 5 will now be explained with reference to Figs. 4 and 5. In Fig. 4, on the basis of the phase $\theta_{dc}$ of the dc axis inputted from the phase adjustment unit 10, as shown in Figs. 1 and 4, the coordinate conversion unit 5a performs coordinate conversion to convert the three phase current signals Iuc, Ivc, and Iwc from the current detection unit 2 into a vector quantity in the dc-qc axis coordinate system. The previously described dc axis detected current value Idc and qc axis detected current value Iqc are obtained by this coordinate conversion. These detected current values Idc and Iqc are outputted from the coordinate conversion unit 5a to the fundamental wave component extraction unit 5b and to the high frequency component extraction unit 5c. It should be understood that, in Fig. 5C, only an example of the waveform of the dc axis detected current value Idc is shown.

The fundamental wave component extraction unit 5b samples each of the dc axis detected current value Idc and the qc axis detected current value Iqc that are inputted from the coordinate conversion unit 5a repeatedly at a predetermined timing. While in Fig. 5C an example of each detection point is shown in which the dc axis detected current value Idc is sampled, the same procedure is performed for the qc axis detected current value Iqc . Thus the average values of several sampled values of the dc axis detected current value Idc and of the qc axis detected current value Iqc are iteratively obtained by implementing sequential averaging processing, and the high frequency components included in these cancel one another out, so that the fundamental wave current component IdcAVG that is the excitation current component in the dc axial direction and the fundamental wave current component IqcAVG that is the torque current component in the qc axial direction are extracted. The fundamental wave current components IdcAVG and IqcAVG that have been extracted in this manner are outputted from the current component separation unit 5 to the vector calculation unit 4 and to the high frequency current norm command generation unit 7, as shown in Fig. 1.

The high frequency component extraction unit 5c calculates the differential values $\Delta I_{dc}$ and $\Delta I_{qc}$ for one cycle by respectively subtracting the values of the dc axis detected current value Idc and of the qc axis detected current value Iqc inputted from the coordinate conversion unit 5a and detected in the previous cycle from their values detected in this cycle. While in Fig. 5D the differential value $\Delta I_{dc}$ that is calculated for the dc axis detected current value Idc is shown, the same also holds for the differential value $\Delta I_{dc}$ that is calculated for the qc axis detected current value Iqc. Here, since the frequency of the fundamental wave components of the dc axis detected current value Idc and the qc axis detected current value Iqc is sufficiently lower than the frequency of the alternating voltage, accordingly the above described differential values $\Delta I_{dc}$ and $\Delta I_{qc}$ may be considered as almost being the amounts of current change due to the alternating voltage. In other words, it becomes possible to implement extraction of the differential values $\Delta I_{dc}$ and $\Delta I_{qc}$ that specify the high frequency current components corresponding to the alternating voltage from the detected current values Idc and Iqc at high speed, without employing any special type of filter or the like. As will be understood from Figs. 5B and 5D, it should be understood that the positive or negative sign of the differential value $\Delta I_{dc}$ for the dc axis changes over along with changing over of the positive or negative sign of the alternating voltage Vph*, while being delayed by just one half cycle. The same relationship also holds for the relationship between the differential value $\Delta I_{qc}$ for the qc axis and the alternating voltage Vzh*. The differential value $\Delta I_{dc}$ for the dc axis and the differential value $\Delta I_{qc}$ for the qc axis that have thus been calculated are outputted from the high frequency component extraction unit 5c to the sign correction unit 5d.

The sign correction unit 5d performs sign correction upon the differential value $\Delta I_{dc}$ for the dc axis and the differential value $\Delta I_{qc}$ for the qc axis that have been inputted from the high frequency component extraction unit 5c, on the basis of the alternating voltage waveform WF that is inputted from the voltage output unit 3 as shown in Figs. 1 and 4. As previously described, the sign of each of the differential values $\Delta I_{dc}$ and $\Delta I_{qc}$ changes along with alternation of the positive or negative sign of the alternating voltage. Due to this, it is possible to perform sign correction upon these differential values by multiplying each of them by the alternating voltage waveform WF, thus eliminating the change of sign. While, in Fig. 5F, the example is shown of multiplying the differential value $\Delta I_{dc}$ for the dc axis shown in Fig. 5D by the alternating voltage waveform WF, the same holds for the differential value $\Delta I_{qc}$ for the qc axis. At this time, according to requirements, it would also be acceptable to arrange for sequential averaging to be performed. The differential values $\Delta I_{dc}$ and $\Delta I_{qc}$ upon which sign correction has been performed in this manner are outputted from the sign correction unit 5d to the axial deviation reference amount calculation unit 5e and to the norm calculation unit 5f respectively as the high frequency current vector ($\Delta I_{dcAVG}$, $\Delta I_{qcAVG}$).

On the basis of the information for the phase $\theta_{dc}$ of the dc axis and the information for the phase $\theta_p$ of the p axis that have been inputted from the phase adjustment unit 10 as shown in Fig. 1 and the high frequency current vector ($\Delta I_{dcAVG}$, $\Delta I_{qcAVG}$) that has been inputted from the sign correction unit 5d, the axial deviation reference amount calculation unit 5e calculates the phase difference between the high frequency voltage superposed upon the fundamental wave and the high frequency current generated due thereto. This phase difference is the phase difference $\theta_{ivh}$ of the high frequency current with respect to the p axis shown in Fig. 2. As will be understood from Fig. 2, since phase difference information for the phase $\theta_p$ and the phase $\theta_d$ is included in the phase difference $\theta_{ivh}$, accordingly it is possible, for example, to calculate the phase difference $\theta_{ivh}$ according to the following Equation (1). In the Equation (1), the arctangent term is a function of the phase $\theta_d$.

$$\theta_{ivh} = \arctan\left(\frac{\Delta I_{qcAVG}}{\Delta I_{dcAVG}}\right) - \theta_p + \theta_{dc} \qquad \cdots (1)$$

After the phase difference $\theta_{ivh}$ has been calculated, the axial deviation reference amount calculation unit 5e further multiplies this phase difference $\theta_{ivh}$ by a negative gain, and outputs the result as an axial deviation reference amount $x_{\theta pd}$. This axial deviation reference amount $x_{\theta pd}$ that has been thus outputted from the axial deviation reference amount calculation unit 5e is outputted from the current component separation unit 5 to the phase adjustment unit 10, as shown in Fig. 1.

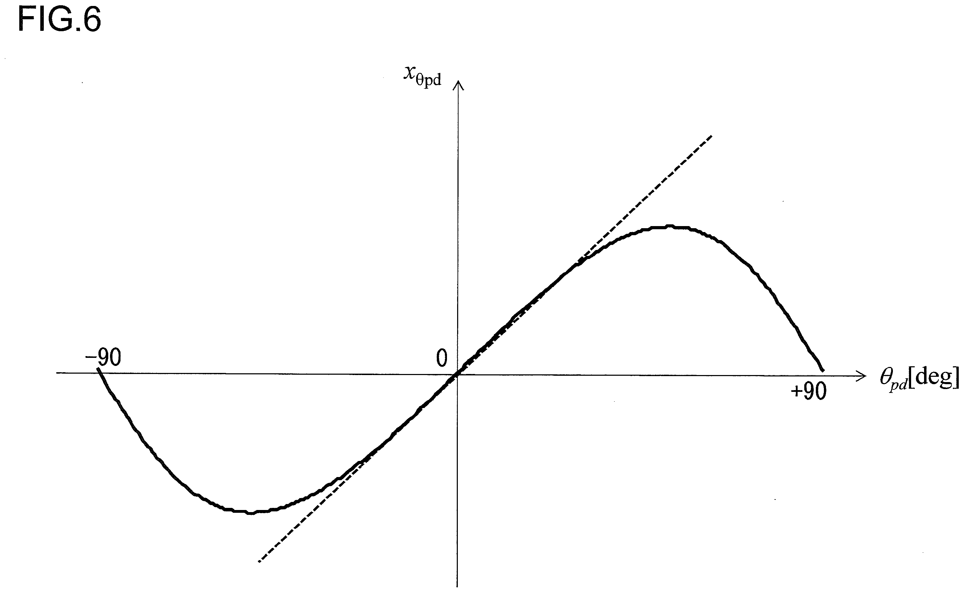

Fig. 6 is a figure for explanation of the characteristic of the axial deviation reference amount $x_{\theta pd}$. As shown in Fig. 6, since this axial deviation reference amount $x_{\theta pd}$ changes according to the deviation $\theta_{pd}$ of the p axis with respect to the d axis, accordingly it will be understood that it includes information for the magnetic pole position, in other words for the phase $\theta d$ of the d axis. In other words, it is possible for the axial deviation reference amount $x_{\theta pd}$ corresponding to the magnetic pole position of the electric motor 1 to be obtained by the axial deviation reference amount calculation unit 5e. Accordingly, the axial deviation reference amount $x_{\theta pd}$ becomes necessary for the phase control system.

The norm calculation unit 5f is an element that is newly added to the current component separation unit 5 in order to implement the electric motor control of the present invention, and it calculates the norm (hereinafter termed the high frequency current norm Ih) of the high frequency current vector ($\Delta I_{dcAVG}$, $\Delta I_{qcAVG}$) that has been inputted from the sign correction unit 5d. Here, by norm is meant the length component of the high frequency current vector. For example, the high frequency current norm Ih may be calculated by applying the H2 norm calculation given by Equation (2) below. This high frequency current norm Ih that has been calculated by the norm calculation unit 5f is outputted from the current component separation unit 5 to the superposed voltage amplitude adjustment unit 9 as shown in Fig. 1, and is employed in the control performed by the superposed voltage amplitude adjustment unit 9 that will be described hereinafter.

$$I_h = \sqrt{\Delta I_{dcAVG}{}^2 + \Delta I_{qcAVG}{}^2} \qquad \cdots (2)$$

As has been explained above, the three phase current signals Iuc, Ivc, and Iwc from the current detection unit 2 are separated by the current component separation unit 5 into fundamental wave current components and high frequency current components. And the fundamental wave current components IdcAVG and IqcAVG are outputted to the vector calculation unit 4 and to the high frequency current norm command generation unit 7, the axial deviation reference amount $x_{\theta pd}$ based upon these high frequency current components is outputted to the phase adjustment unit 10, and the high frequency current norm Ih is outputted to the superposed voltage amplitude adjustment unit 9.

The axial deviation reference amount command generation unit 8 generates a predetermined axial deviation reference amount command $x_{\theta pd}$* and outputs it to the phase adjustment unit 10. And, due to the operation of the phase adjustment unit 10 that will be described hereinafter, the superposed phase and the control axis phase, in other words the phase $\theta_p$ of the p axis and the phase $\theta_{dc}$ of the dc axis, are adjusted by the phase control system of the electric motor control device 40a so that the axial deviation reference amount command $x_{\theta pd}$* generated by the axial deviation reference amount command generation unit 8 and the above described axial deviation reference amount $x_{\theta pd}$ agree with one another. The axial deviation reference amount command $x_{\theta pd}$* takes a value for which the superposed phase $\theta_p$ and the phase $\theta_d$ of the d axis (i.e. of the magnetic pole axis) agree with one another, when $x_{\theta pd}=x_{\theta pd}$*. Here, if the electric motor 1 has saliency, then the axial deviation reference amount $x_{\theta pd}$ has a characteristic such as shown in Fig. 6, and $x_{\theta pd}=0$ when the deviation $\theta_{pd}$ of the p axis with respect to the d axis is zero. Due to this, normally $x_{\theta pd}$*=0 will be acceptable. By the phase $\theta_p$ of the p axis being controlled so that always $x_{\theta pd}=x_{\theta pd}$*, it may be considered that $\theta_p=\theta_d$. According to this type of theory, the phase $\theta_d$ of the magnetic pole position of the electric motor 1 may be estimated by the phase adjustment unit 10 in the electric motor control device 40a without the use of any position sensor.

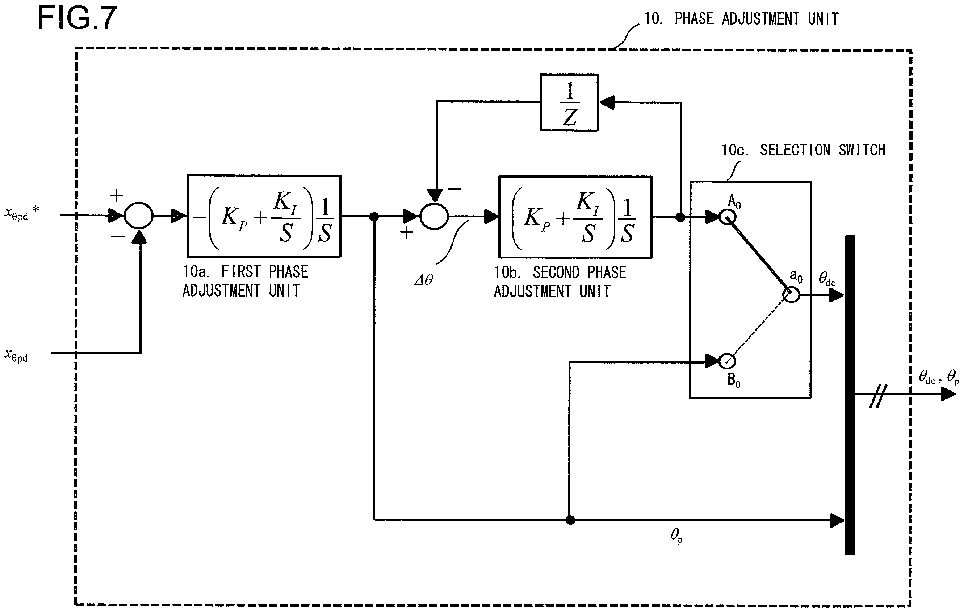

Fig. 7 shows an example of the internal structure of the phase adjustment unit 10. As shown in Fig. 7, this phase adjustment unit 10 includes a first phase adjustment unit 10a, a second phase adjustment unit 10b, and a selection switch 10c. These structural elements are all implemented as processes that the CPU executes according to a program, in a similar manner to the various structural elements included in the electric motor control device 40a, the voltage output unit 3, and the current component separation unit 5 described above.

The first phase adjustment unit 10a adjusts the superposing phase $\theta_p$ so that the axial deviation reference amount $x_{\theta pd}$ inputted from the current component separation unit 5 as shown in Fig. 1 and the axial deviation reference amount command $x_{\theta pd}$* from the axial deviation reference amount command generation unit 8 agree with one another. Here, if the response of the first phase adjustment unit 10a is sufficiently rapid, then it may be considered that, by adjusting the superposing phase $\theta_p$ so as to make the axial deviation reference amount $x_{\theta pd}$ and the axial deviation reference amount command $x_{\theta pd}$* agree with one another, the superposing phase $\theta_p$ and the magnetic pole axis phase $\theta_d$ will agree with one another, as previously described. In this case, the difference between the superposing phase $\theta_p$ and the control axis phase $\theta_{dc}$ becomes the so called axial deviation $\Delta\theta$ between the current magnetic pole axis phase $\theta_d$ and the control axis phase $\theta_{dc}$. The superposing phase $\theta_p$ that has been adjusted by the first phase adjustment unit 10a is outputted to the second phase adjustment unit 10b and to the selection switch 10c. Moreover, the superposing phase $\theta_p$ is also outputted from the phase adjustment unit 10 to the voltage output unit 3 and to the current component separation unit 5 as phase information for the p axis, as shown in Fig. 1.

The second phase adjustment unit 10b calculates the previously described axial deviation $\Delta\theta$ on the basis of the superposing phase $\theta_p$ from the first phase adjustment unit 10a, and adjusts the control axis phase $\theta_{dc}$ so that this axial deviation $\Delta\theta$ becomes zero. By adjusting the control axis phase $\theta_{dc}$ in this manner, the phase $\theta_d$ of the magnetic pole axis, in other words the phase $\theta_d$ of the d axis, and the phase $\theta_{dc}$ of the control axis, in other words the phase $\theta_{dc}$ of the dc axis, are synchronized. The control axis phase $\theta_{dc}$ that has thus been adjusted by the second phase adjustment unit 10b is outputted to the selection switch 10c.

The selection switch 10c has two contact points $A_0$ and $B_0$ on its input side, and selects one or the other of these contact points and connects it to a contact point $a_0$ on its output side. The control axis phase $\theta_{dc}$ is inputted from the second phase adjustment unit 10b to the contact point $A_0$, while the superposing phase $\theta_p$ is inputted from the first phase adjustment unit 10a to the contact point $B_0$. Due to this, when the selection switch 10c has selected its contact point $A_0$, then the phase adjustment unit 10 is able to output the control axis phase $\theta_{dc}$ to the voltage output unit 3 and the current component separation unit 5 as phase information for the dc axis. On the other hand, when the selection switch 10c has selected its contact point $B_0$, then the phase adjustment unit 10 outputs the superposing phase $\theta_p$ to the voltage output unit 3 and the current component separation unit 5 as the phase $\theta_{dc}$ of the dc axis. Due to this, it is possible to alleviate the load of calculation upon the voltage output unit 3 and the current component separation unit 5 by making the phase $\theta_p$ of the p axis and the phase $\theta_{dc}$ of the dc axis agree with one another. It should be understood that, while it is possible to change over the connection of the selection switch 10c according to requirements as described above, it would also be acceptable to arrange for this connection to be fixed to either one thereof. In this case, the unnecessary processing for operating the selection switch 10c and so on may be omitted. The same holds for the other selection switches that are explained below and shown in the figures.

Due to the operation of the various structural elements included in the phase adjustment unit 10 as described above, the phase adjustment unit 10 is able to control the superposing phase $\theta_p$ and the control axis phase $\theta_{dc}$ separately. Due to this, it becomes possible to design the control response of the first phase adjustment unit 10a without any relationship to the design of the response of the current control system.

By the operation of the phase control system as explained above, it is possible to synchronize the d axis and the dc axis without using any type of position sensor.

Next the operation of the current control system will be explained in the following, under the assumption that the dc axis is made to agree with the d axis due to the operation of the phase control system as described above.

On the basis of input information inputted from a higher level system to the electric motor control device 40a such as a torque command and so on, the current command generation unit 6 generates the dc axis current command value Idc* corresponding to the d axis current Id that is the excitation current component of the current of the AC electrical power supplied to the electric motor 1, and the q axis current command value Iqc* corresponding to the q axis current Iq that is the torque current component of the current of the AC electrical power supplied to the electric motor 1. These current command values Idc* and Iqc* that have been generated by the current command generation unit 6 are outputted to the vector calculation unit 4 and to the high frequency current norm command generation unit 7.

On the basis of the current command values Idc* and Iqc* from the current command generation unit 6 and the fundamental wave current components IdcAVG and IqcAVG from the current component separation unit 5, the vector calculation unit 4 adjusts the fundamental voltage command values Vdc* and Vqc* that are the fundamental wave vector of the voltage command. In concrete terms, the vector calculation unit 4 calculates the fundamental voltage command values Vdc* and Vqc* so that the fundamental wave current components IdcAVG and IqcAVG respectively agree with the current command values Idc* and Iqc*, and outputs the results of this calculation to the voltage output unit 3. And the vector calculation unit 4 is able to perform this calculation at a predetermined control response speed that corresponds to the operating frequency of the electric motor 1. It should be understood that, while the current command value Idc* is zero in the normal state, in some cases during some specified control states it may not be set to zero, such as during field weakening or during starting or the like. For example, during starting, it is possible to transition from the rotor being fixed in a predetermined rotational position to normal vector control by gradually increasing the detected current value Idc of the d axis.

According to the operation of the current control system as explained above, it is possible to make the detected current values Idc and Iqc in the dc-qc axis coordinate system agree respectively with the current command values Idc* and Iqc*.

The operations of the current control system and of the phase control system described above are the fundamental operations of electric motor control. With the present invention, in addition to this current control system and phase control system, furthermore, a high frequency current control system for controlling the norm value of high frequency current ripple is also implemented for the electric motor control device 40a. In this embodiment, principally it is the norm calculation unit 5f, the high frequency current norm command generation unit 7, and the superposed voltage amplitude adjustment unit 9 that are added to the current component separation unit 5 as described above that play the role of this high frequency current control system.

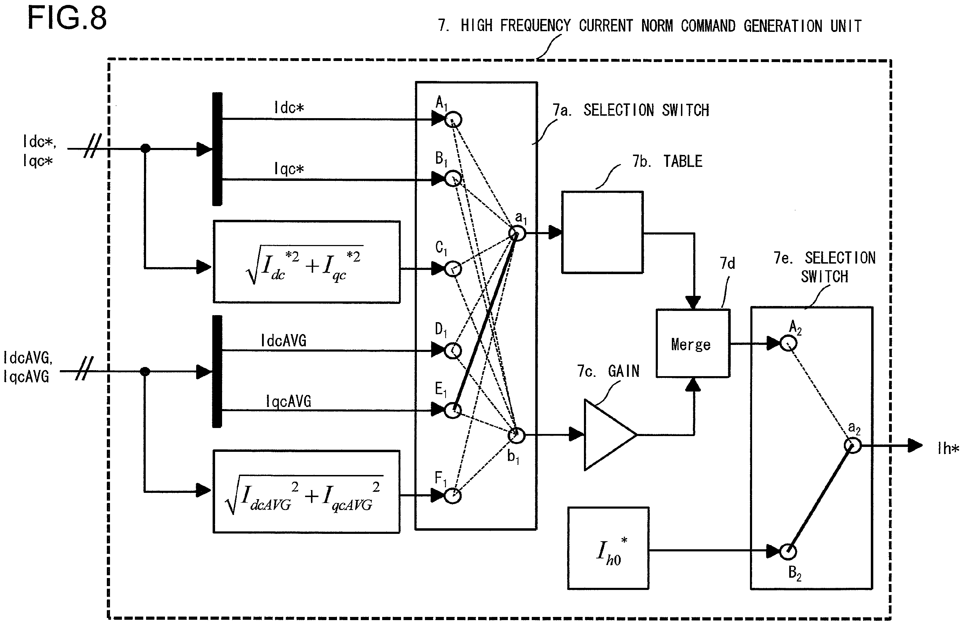

Fig. 8 shows an example of the internal structure of the high frequency current norm command generation unit 7. As shown in Fig. 8, this high frequency current norm command generation unit 7 includes a selection switch 7a, a table 7b, a gain 7c, a combiner 7d, and a selection switch 7e. These structural elements are all implemented as processes that the CPU executes according to a program, in a similar manner to the various structural elements included in the electric motor control device 40a, the voltage output unit 3, the current component separation unit 5, and the phase adjustment unit 10 described above.

The selection switch 7a has a total of six contact points $A_1$ through $F_1$ on its input side, and can select any desired combination from among these contact points, and connect between these contact points and either one or both of two contact points $a_1$ and $b_1$ on its output side. The current command values Idc* and Iqc* from the current command generation unit 6 are respectively inputted to the contact points $A_1$ and $B_1$ on the input side, and the norm of the current command vector specified by these current command values is inputted to the contact point $C_1$. Moreover, the fundamental wave current components IdcAVG and IqcAVG are respectively inputted from the current component separation unit 5 to the contact points D1 and E1, and the norm of the fundamental wave current vector specified by these fundamental wave current components is inputted to the contact point $F_1$. On the other hand, the contact point $a_1$ on the output side is connected to the table 7b, and the contact point $b_1$ on the output side is connected to the gain 7c. Due to this, by connecting together any desired contact points on the input and the output side with the selection switch 7, it is possible to output any ones of the various input values that are inputted to the contact points $A_1$ through $F_1$ from the contact points $a_1$ and $b_1$ to the table 7b and to the gain 7c respectively. It should be understood that it would be acceptable either to arrange to output mutually different combinations of the input values from the selection switch 7a to the table 7b and to the gain 7c respectively, or to arrange for the same combination to be outputted to both of them. It would also be acceptable to arrange to output from the selection switch 7a to either one of the table 7b and the gain 7c, while intercepting output to the other one thereof.

The table 7b holds a relationship between input values and output values that is set in advance as tabular information, and an output value is determined by reference to this tabular information on the basis of the value inputted from the selection switch 7a. The output value from this table 7b is inputted to the combiner 7d.

The gain 7c determines an output value by multiplying the value inputted from the selection switch 7a by a predetermined gain. The output value from this gain 7c is inputted to the combiner 7d.

The combiner 7d combines the value outputted from the table 7b and the value outputted from the gain 7c according to a predetermined rule, and outputs the result to the contact point $A_2$ of the selection switch 7e. For example, when combining the value outputted from the table 7b and the value outputted from the gain 7c, the combiner 7d may simply add together the value outputted from the table 7b and the value outputted from the gain 7c, or may add them together after having weighted them in a predetermined ratio. It should be understood that, if only one or the other of the table 7b and the gain 7c is selected as the output destination by the selection switch 7a, then it may be arranged for the combiner 7d to output the value outputted from this output destination just as it is to the contact point $A_2$ of the selection switch 7e, or to output this calculated result after having performed a predetermined calculation upon it.

The selection switch 7e has two contact points $A_2$ and $B_2$ on the input side, and can select either one of these two contact points and connect between this selected contact point and a contact point $a_2$ on its output side. The output from the combiner 7d is inputted to the contact point $A_2$, and a predetermined value Ih0* that is determined in advance is inputted to the contact point $B_2$. Due to this, if the selection switch 7e has selected the contact point $A_2$, then the high frequency current norm command generation unit 7 outputs the output from the combiner 7d to the superposed voltage amplitude adjustment unit 9 as the high frequency current norm command value Ih*. And due to this the high frequency current norm command value Ih*, based upon at least one of the current command values Idc* and Iqc* of the current command vector, the fundamental wave current components IdcAVG and IqcAVG of the fundamental wave current vector, the norm of the current command vector, and the norm of the fundamental wave current vector, is outputted from the high frequency current norm command generation unit 7. On the other hand, if the selection switch 7e has selected the contact point B2, then the high frequency current norm command generation unit 7 outputs the fixed value Ih0* to the superposed voltage amplitude adjustment unit 9 as the high frequency current norm command value Ih*.

As has been explained above, the high frequency current norm command value Ih* is generated by the high frequency current norm command generation unit 7 and is outputted to the superposed voltage amplitude adjustment unit 9. This high frequency current norm command value Ih* is a value that is determined from the detection accuracy of the current detection unit 2 and from the anticipated saliency ratio characteristic of the electric motor 1. Here the saliency ratio characteristic determines the waveform of the axial deviation reference amount $x_{\theta pd}$ like that shown in Fig. 6, and is an intrinsic characteristic of the electric motor 1.

As the simplest control method, it will be acceptable to make the high frequency current norm command value Ih* be a fixed value due to the selection switch 7e selecting the contact point $B_2$ as described above and thus making Ih*=Ih0*. Conversely, since the saliency ratio characteristic is not unchanging with respect to the current operational point, in some cases, it is also considered to be desirable to make the high frequency current norm command value Ih* be variable by selecting the contact point $A_2$ with the selection switch 7e, and by thus using the output value from the table 7b or the gain 7c, as described above. For example, if the saliency ratio characteristic of the electric motor 1 deteriorates in a high torque condition, then it will be acceptable to arrange to make the high frequency current norm command value Ih* be variable by using the output value from the gain 7c. Moreover if the saliency ratio characteristic of the electric motor 1 is complicated, such as if for example the saliency ratio characteristic deteriorates in a specific current condition or the like, then it will be acceptable to arrange to determine the high frequency current norm command value Ih* by using the output value from the table 7b. In this type of case, as the input from the selection switch 7a to the gain 7c and the table 7b, it will be acceptable to use the current command value Idc* or Iqc*, or the norm of the of the current command vector given by these current command values. On the other hand, if a higher speed response is required, then it will be acceptable to use the fundamental wave current component IdcAVG or IqcAVG, or the norm of the of the fundamental wave current vector given by these fundamental wave current components.

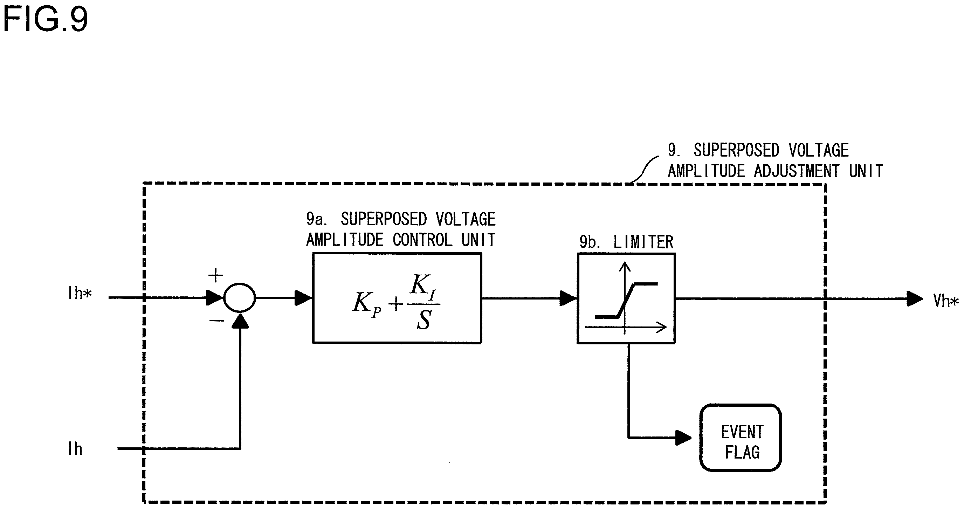

Fig. 9 shows the internal structure of the superposed voltage amplitude adjustment unit 9. As shown in Fig. 9, this superposed voltage amplitude adjustment unit 9 includes a superposed voltage amplitude control unit 9a and a limiter 9b. These structural elements are all implemented as processes that the CPU executes according to a program, in a similar manner to the various structural elements included in the electric motor control device 40a, the voltage output unit 3, the current component separation unit 5, the phase adjustment unit 10, and the high frequency current norm command generation unit 7 described above.

The superposed voltage amplitude control unit 9a determines the superposed voltage amplitude command value Vh* so that the high frequency current norm Ih from the current component separation unit 5 and the high frequency current norm command value Ih* from the high frequency current norm command generation unit 7 agree with one another. And, as shown in Fig. 9, the superposed voltage amplitude control unit 9a may include structure for PI control or for I control. The superposed voltage amplitude command value Vh* that has been obtained by the superposed voltage amplitude control unit 9a is outputted to the limiter 9b.

The limiter 9b limits and outputs the superposed voltage amplitude command value Vh* from the superposed voltage amplitude control unit 9a, so that the superposed voltage amplitude command value Vh* does not assume a negative value or an abnormally small value. The superposed voltage amplitude command value Vh* that has thus passed through the limiter 9b is outputted from the superposed voltage amplitude adjustment unit 9 to the voltage output unit 3 as shown in Fig. 1, and is used in the generation of the square wave signal, as described above. The limiter 9b also calculates the sum of the norm of the fundamental wave vector of the voltage command given by the fundamental voltage command values Vdc* and Vqc*, and the superposed voltage amplitude command value Vh*. And, on the basis of the result of this calculation, the limiter 9b makes a decision as to whether or not the voltage outputted by the electrical power conversion unit 11 corresponding to the three-phase AC voltage command values Vu*, Vv*, and Vw* from the electric motor control device 40a is in a state of exceeding a predetermined upper limit value of the voltage that has been determined as the voltage that can be outputted. If the result is that it is decided that the voltage outputted by the electrical power conversion unit 11 is in a state of exceeding the voltage that can be outputted, then the limiter 9b determines that sustained operation is impossible, and raises an event flag. If it is detected that this type of event flag has been raised, then the electric motor control device 40a performs predetermined processing. For example, it may change the frequency of the alternating voltage, or may perform error display or cutoff of the output or the like.

As has been explained above, the superposed voltage amplitude command value Vh* for adjusting the amplitude of the alternating voltage that the voltage output unit 3 superposes on the fundamental voltage command values Vdc* and Vqc* is obtained by the superposed voltage amplitude adjustment unit 9, and this superposed voltage amplitude command value Vh* is outputted to the voltage output unit 3. Here, each of the high frequency current norm Ih, the axial deviation reference amount $x_{\theta pd}$, and the fundamental wave current components IdcAVG and IqcAVG is separated by the current component separation unit 5, and each of these is controlled by a separate control system. Because of this, even if the high frequency current norm Ih fluctuates due to the high frequency current control system adjusting the superposed voltage amplitude command value Vh* as described above, absolutely no influence is exerted upon the other current control system or phase control system. Accordingly, it is possible to perform design of the optimum control response for each of the control systems.

Next, the principal beneficial effects of the present invention obtained by the embodiment explained above will be described.

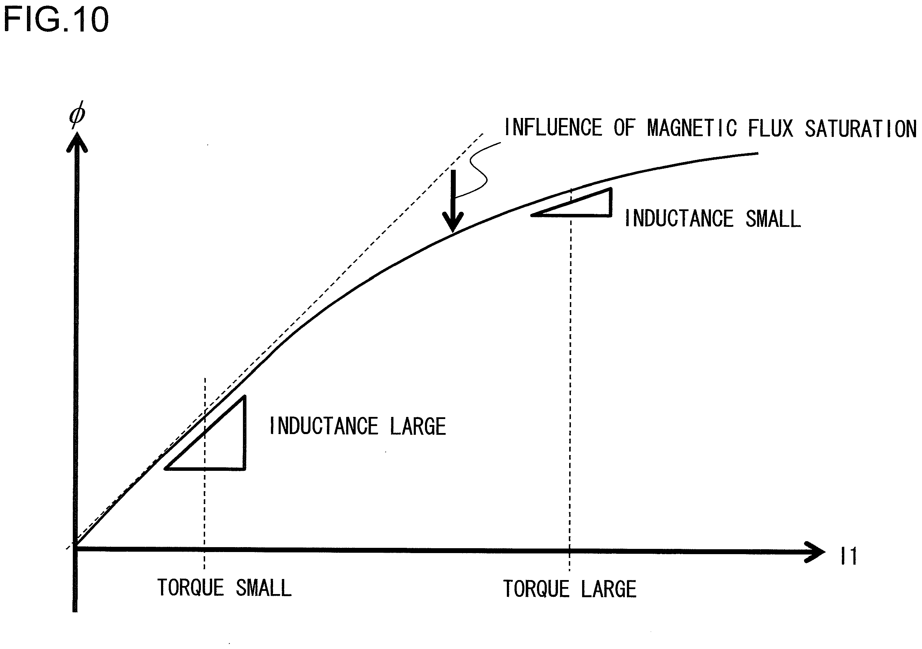

Fig. 10 is a figure for explaining the current and inductance characteristics of an electric motor 1. This figure shows graphically the relationship between the norm I1 of the fundamental wave current vector that is given by the above described fundamental wave current components IdcAVG and IqcAVG, and the main magnetic flux φ that is generated in the electric motor 1. In Fig. 10, the horizontal axis of the graph shows the magnitude of the fundamental wave current norm I1, and its vertical axis shows the magnitude of the main magnetic flux φ.

In the range in which the fundamental wave current norm I1 is comparatively small, the torque generated by the electric motor 1 is small. At this time the inclination of the graph shown in Fig. 10 is almost constant, and it will be understood that the relationship between the norm I1 of the fundamental wave current vector and the main magnetic flux φ is an almost proportional relationship. The inductance L of the electric motor 1 is defined by this inclination. However, in the state in which the torque is large and the current flow rate, that is expressed as the fundamental wave current norm I1, is comparatively large, since the magnetic flux linkage through the rotor of the electric motor 1 is saturated, accordingly the inclination of the graph becomes smaller as shown in Fig. 10; in other words, the inductance L becomes smaller. Here, it is supposed that the superposed voltage amplitude Vh that specifies the amplitude of the alternating voltage superposed, during generation of the three-phase AC voltage command values Vu*, Vv*, and Vw*, according to the superposed voltage amplitude command value Vh* from the previously described superposed voltage amplitude adjustment unit 9 is kept constant. The high frequency current norm Ih when the superposed voltage amplitude Vh is kept constant is inversely proportional to the above described inductance L. In other words, when the superposed voltage amplitude command value Vh* is set to be constant, the high frequency current norm Ih comes to increase according to increase of the torque, due to the influence of magnetic flux saturation.

When the torque increases, and when the fundamental wave current norm I1 that flows in the electric motor 1 has increased to near the limit of the hardware performance of the electric motor control system 100, in some cases it may happen that, due to the high frequency current norm Ih increasing due to magnetic flux saturation, the current value may exceed the above described current limit, and this is undesirable. In the following, this type of phenomenon will be termed OC ("Over Current").

In relation to this type of problem, with the present invention, the previously described control system is employed that includes the norm calculation unit 5f, the high frequency current norm command generation unit 7, and the superposed voltage amplitude adjustment unit 9, so that the high frequency current norm Ih is controlled to a predetermined value. Due to this, the high frequency current norm Ih can still be held constant, even if the inductance changes due to the phenomenon of magnetic flux saturation.

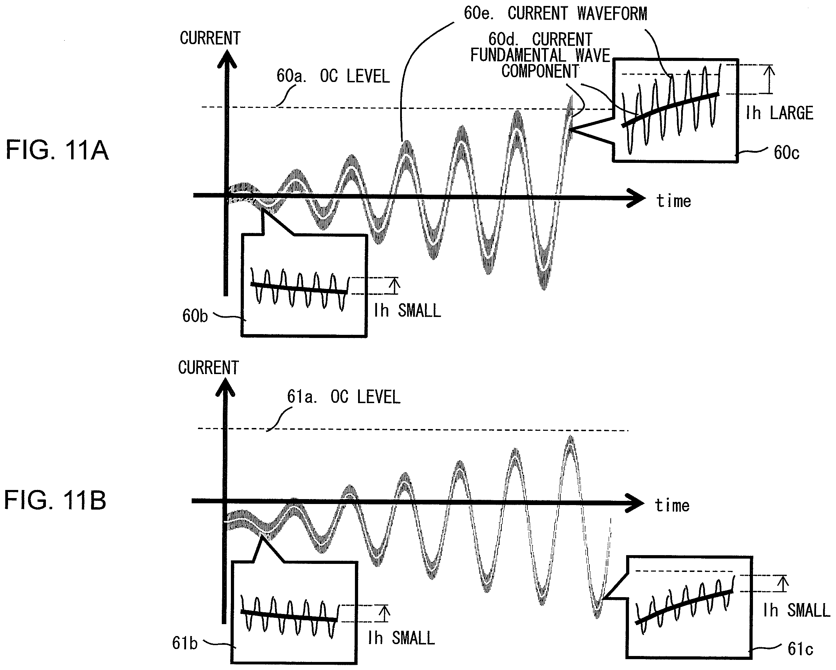

In the following, the benefits of the present invention will be explained using the explanatory figures of Figs. 11A and 11B. Fig. 11A shows an example of the waveform of the u phase AC current Iu when the torque is gradually increased while keeping the superposed voltage amplitude command value Vh* at a constant value. In Fig. 11A, the OC level 60a shows the current limit at which OC takes place. Moreover, the enlarged waveform 60b shows in magnified form the waveform of the AC current Iu when the torque is comparatively small, while the enlarged waveform 60c shows in magnified form the waveform of the AC current Iu in the vicinity of OC when the torque is comparatively large. In this enlarged waveform 60c, the waveform 60d of the current fundamental wave component that corresponds to the fundamental wave current norm I1 is shown by the thick line. Moreover, in this enlarged waveform 60c, the waveform 60e of the AC current Iu that is created by the high frequency current norm Ih being superposed to the fundamental wave current norm I1 is shown as a waveform that fluctuates above and below the waveform 60d.

Here, since the tendency of magnetic flux saturation is different for each individual electric motor 1, accordingly it is not possible to know in advance to what extent the high frequency current norm Ih will increase, and due to this unexpected OC may occur. Moreover, in a case such as if the length of the cables from the electrical power conversion unit 11 to the electric motor 1 is comparatively long, or if the shape of the cables changes partway along them, then it is not possible to obtain sufficient accuracy in the estimation of the magnetic pole position, since the inductance appears to increase and the high frequency current norm Ih appears to become smaller. Due to this, sometimes it may happen that the electric motor loses synchronization, in which case it becomes impossible to continue operation.

Fig. 11B shows an example of the waveform of the u phase AC current Iu that is obtained when the present invention is applied. In a similar manner to the waveform example shown in Fig. 11A, the waveform shown in Fig. 11B is an example of a waveform of the AC current Iu when the superposed voltage amplitude command value Vh* is kept constant and the torque is gradually increased, and the OC level 61a shows the current limit at which OC takes place. Furthermore, the enlarged waveform 61b shows in magnified form the waveform of the AC current Iu when the torque is comparatively small, while the enlarged waveform 61c shows in magnified form the waveform of the AC current Iu in the vicinity of OC when the torque is comparatively large.

As will be understood from Fig. 11B, when the present invention is applied, even if the torque increases and the current becomes great, still the high frequency current norm Ih does not increase as in the example shown in Fig. 11A. Due to this, it becomes possible to maintain operation until the fundamental wave current norm I1 reaches the vicinity of the OC level 61a that shows the current limit. Moreover, since it is possible to determine the upper limit value for the current command value in advance on the basis of the high frequency current norm command value Ih*, accordingly it is possible to prevent OC before it even happens. Furthermore, no influence is experienced from apparent inductance fluctuation due to change of the configuration of the cables as described above, and, since it is possible to ensure sufficient accuracy in the estimation of the magnetic pole position, accordingly it is possible to maintain operation without the electric motor losing synchronization.

As described above, with this electric motor control device 40a, the high frequency current norm Ih that specifies the magnitude of the high frequency current component corresponding to the alternating voltage, the fundamental wave current components IdcAVG and IqcAVG that correspond to the fundamental voltage command values Vdc* and Vqc*, and the axial deviation reference amount $x_{\theta pd}$ that corresponds to the magnetic pole position of the electric motor 1 are extracted from the current detected by the current detection unit 2 by the current component separation unit 5. And, using these extracted values, control of the high frequency current control system, control of the current control system, and control of the phase control system are performed independently of one another. By adopting this type of structure, it becomes possible to ensure sufficient accuracy in the estimation of the position of the magnetic pole even in consideration of change of the inductance due to magnetic flux saturation or change of the shape of the cables or the like, and moreover it becomes possible to prevent OC before it even happens.

- SECOND EMBODIMENT -

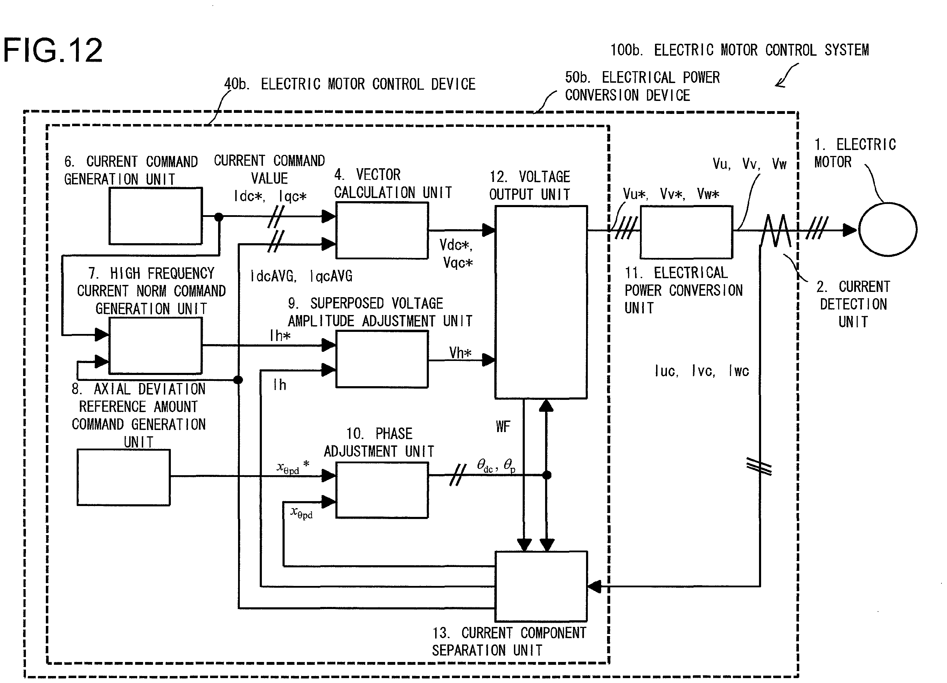

Fig. 12 is an overall structural figure showing an electric motor control system 100b according to the second embodiment of the present invention. This electric motor control system 100b includes an electrical power conversion device 50b and an electric motor 1. The electrical power conversion device 50b includes an electric motor control device 40b, an electrical power conversion unit 11, and a current detection unit 2. It should be understood that the electric motor 1, the electrical power conversion unit 11, and the current detection unit 2 are the same as those included in the electric motor control system 100a shown in Fig. 1. In the following, the differences between the electric motor control device 40b of this embodiment and the electric motor control device 40a explained in the description of the first embodiment will be explained with reference to the figures.

The electric motor control device 40b differs from the electric motor control device 40a by the feature that, instead of the voltage output unit 3 and the current component separation unit 5 that are incorporated in the electric motor control device 40a shown in Fig. 1, it incorporates a voltage output unit 12 and a current component separation unit 13 as shown in Fig. 12.

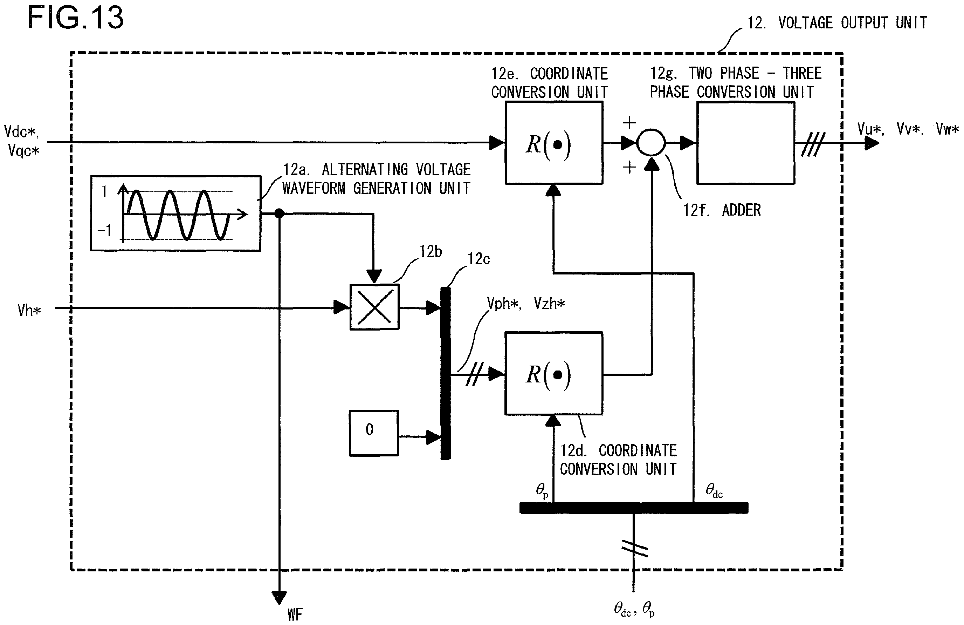

Fig. 13 is an internal structural diagram of the voltage output unit 12. In the voltage output unit 3 shown in Fig. 3, a square wave alternating voltage was generated by the alternating voltage waveform generation unit 3 a. By contrast, in the voltage output unit 12 shown in Fig. 13, a sine wave alternating voltage is generated by the alternating voltage waveform generation unit 12a. In this manner, in this embodiment, the feature of difference as compared to the first embodiment is that, in order for the three-phase AC voltage command values Vu*, Vv*, and Vw* to be outputted from the electric motor control device 40b, a sine wave high frequency voltage rather than a square wave high frequency voltage is superposed. It should be understood that the various other structural elements apart from the alternating voltage waveform generation unit 12a, such as the multiplier 12b, the combiner 12c, the coordinate conversion units 12d and 12e, the adder 12f, and the two phase - three phase conversion unit 12g, perform similar processing to the respectively corresponding structural elements in Fig. 3.

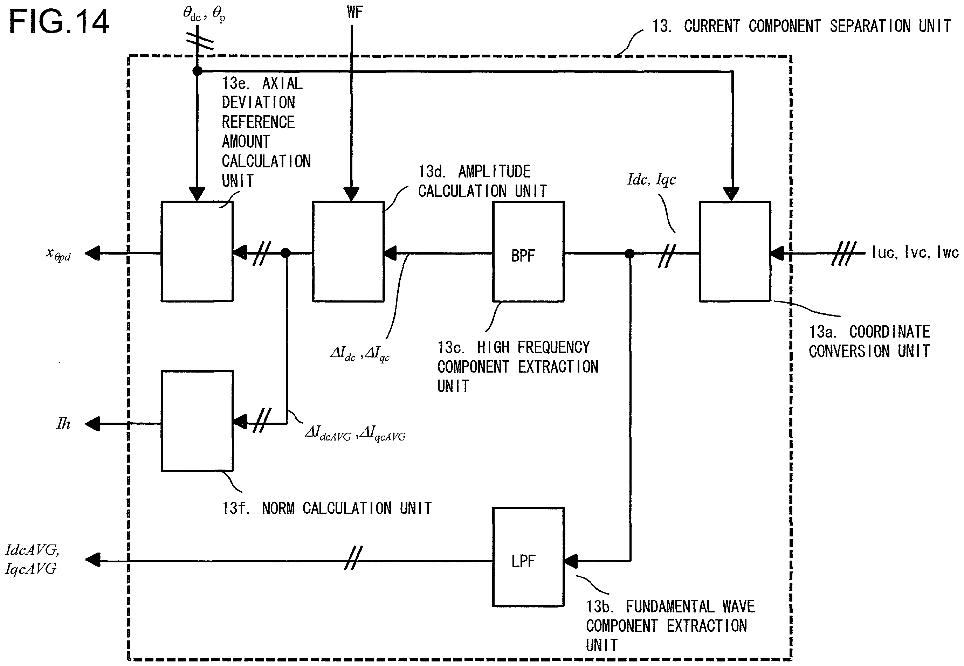

Fig. 14 shows the internal structure of the current component separation unit 13. In the current component separation unit 5 shown in Fig. 4, the fundamental wave component extraction unit 5b extracted the fundamental wave current components IdcAVG and IqcAVG by sampling the detected current values Idc and Iqc outputted from the coordinate conversion unit 5a at respective predetermined timings, and performing sequential averaging processing. By contrast, in the voltage output unit 13 shown in Fig. 14, the fundamental wave component extraction unit 13b extracts the fundamental wave current components IdcAVG and IqcAVG by eliminating the high frequency components from each of the detected current values Idc and Iqc using a LPF (Low Pass Filter).

Moreover, in the current component separation unit 5 shown in Fig. 4, the high frequency current vector ($\Delta I_{dcAVG}$, $\Delta I_{qcAVG}$) was extracted by the high frequency component extraction unit 5c calculating the differential values $\Delta I_{dc}$ and $\Delta I_{qc}$ for one cycle of the detected current values Idc and Iqc, and by the sign correction unit 5d performing sign correction upon these differential values $\Delta I_{dc}$ and $\Delta I_{qc}$. By contrast, in the voltage output unit 13 shown in Fig. 14, the high frequency components $\Delta I_{dc}$ and $\Delta I_{dc}$ corresponding to the differential values described above are extracted by the high frequency component extraction unit 13c using a BPF (Band Pass Filter) through which components of frequency corresponding to the frequency of the sine wave signal of the alternating voltage pass. The high frequency current vector ($\Delta I_{dcAVG}$, $\Delta I_{qcAVG}$) is extracted by the amplitude value of each of the high frequency components $\Delta I_{dc}$ and $\Delta I_{qc}$ that are extracted in this manner being calculated by the amplitude calculation unit 13d.

As has been explained above, in this second embodiment, the feature of difference as compared to the first embodiment is that the fundamental wave current components IdcAVG and IqcAVG and the high frequency current vector ($\Delta I_{dcAVG}$, $\Delta I_{qcAVG}$) are extracted from the detected current values Idc and Iqc using a LPF and/or a BPF. It should be understood that, apart from the fundamental wave component extraction unit 13b, the high frequency component extraction unit 13c, and the amplitude calculation unit 13d, the various other structural elements, in other words the coordinate conversion unit 13a, the axial deviation reference amount calculation unit 13e, and the norm calculation unit 13f, perform similar processing to the respectively corresponding structural elements in Fig. 4.

As described above, superposition of a sine wave and current component separation using a filter are implemented in this embodiment. Due to this, it is possible to suppress the influence of unnecessary harmonic components such as dead time or the like, and thus it is possible to implement stable operation.

- THIRD EMBODIMENT -

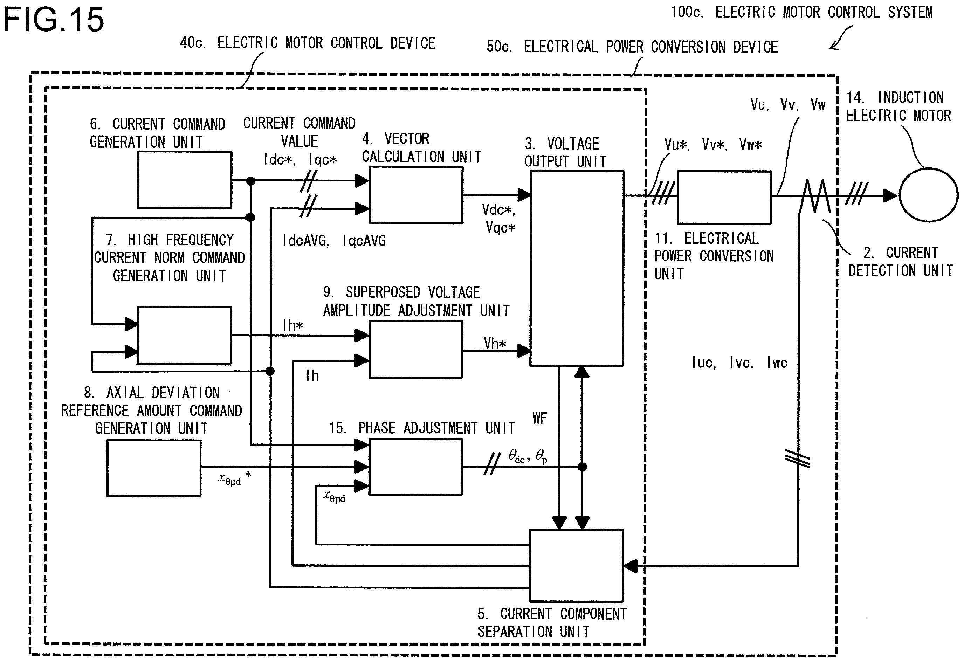

Fig. 15 is an overall structural figure for an electric motor control system 100c according to the third embodiment of the present invention. This electric motor control system 100c includes an electrical power conversion device 50c and an induction electric motor 14. The electrical power conversion device 50c includes an electric motor control device 40c, an electrical power conversion unit 11, and a current detection unit 2. It should be understood that the electrical power conversion unit 11 and the current detection unit 2 are the same as those included in the electric motor control system 100a shown in Fig. 1. In the following, the differences between the electric motor control device 40c of this embodiment and the electric motor control device 40a explained in the description of the first embodiment will be explained with reference to the figures.

The features of difference between the electric motor control system 100c shown in Fig. 15 and the electric motor control system 100a shown in Fig. 1, are that the control object is not simply the electric motor 1 but the induction electric motor 14, and that the electric motor control device 40c includes a phase adjustment unit 15, instead of the phase adjustment unit 10 of Fig. 1. The axial deviation reference amount command $x_{\theta pd}$* from the axial deviation reference amount command generation unit 8 and the axial deviation reference amount $x_{\theta pd}$ from the current component separation unit 5 are inputted to the phase adjustment unit 15, in a similar manner to the case with the phase adjustment unit 10. Moreover, the current command values Idc* and Iqc* from the current command generation unit 6 are also inputted to the phase adjustment unit 15.

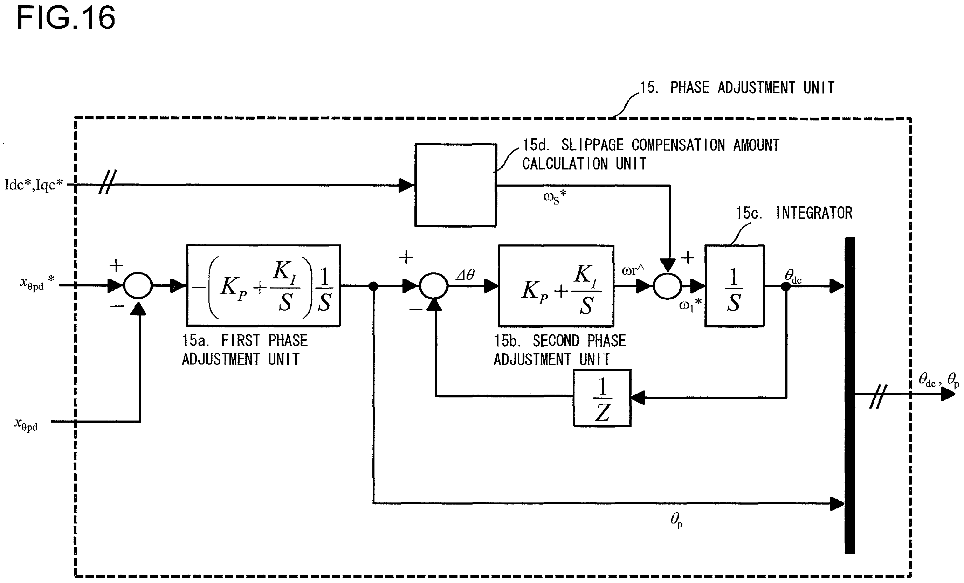

Fig. 16 is an internal structural diagram of the phase adjustment unit 15. The phase adjustment unit 10 shown in Fig. 7 included the first phase adjustment unit 10a, the second phase adjustment unit 10b, and the selection switch 10c. On the other hand, the phase adjustment unit 15 shown in Fig. 16 includes a first phase adjustment unit 15a, a second phase adjustment unit 15b, an integrator 15c, and a slippage compensation amount calculation unit 15d.

In a similar manner to the first phase adjustment unit 10a shown in Fig. 7, the first phase adjustment unit 15a adjusts the phase $\theta_p$ of the axis of superposition, in other words of the p axis, so that the axial deviation reference amount $x_{\theta pd}$ is brought to agree with the axial deviation reference amount command $x_{\theta pd}$* from the axial deviation reference amount command generation unit 8. As a result, the phase $\theta_p$ in this embodiment agrees with the phase of the excitation magnetic flux. In the explanation, for the sake of convenience, herein it will be supposed that the phase of the excitation magnetic flux is equal to the phase $\theta_d$ of the magnetic pole axis, in other words of the d axis.

The second phase adjustment unit 15b adjusts the control axis phase $\theta_{dc}$ so that the control axis phase $\theta_{dc}$ becomes equal to the magnetic pole axis phase $\theta_d$ that is equal to the phase of the excitation magnetic flux as described above, and outputs an estimated speed value ωr^. On the other hand, on the basis of the current command values Idc* and Iqc*inputted from the current command generation unit 6, the slippage compensation amount calculation unit 15d calculates a slippage compensation amount ω$_S$* according to the following Equation (3) using the secondary time constant T of the induction electric motor 14.

$$\omega_S{}^* = \frac{1}{T} \cdot \frac{I_{qc}{}^*}{I_{dc}{}^*} \qquad \cdots (3)$$

The estimated speed value ωr^ and the slippage compensation amount ω$_S$* described above are added together, and the additional value is outputted to the integrator 15c as a speed command value ω$_1$*. By integrating this, the integrator 15c calculates the control axis phase $\theta_{dc}$ and outputs it. This control axis phase $\theta_{dc}$ from the integrator 15c is outputted to the voltage output unit 3 and to the current component separation unit 5, along with the phase of superposition $\theta_p$ from the first phase adjustment unit 15a.

By adopting a structure of the type explained above, it is possible to consider the output of the second phase adjustment unit 15b as an estimated speed value ωr^. The higher level system determines the state of the electric motor control system 100c on the basis of this estimated speed value ωr^, and it is possible for the higher level system to output a torque command for the current command generation unit 6 to generate the current commands Idc* and Iqc*.

- FOURTH EMBODIMENT -

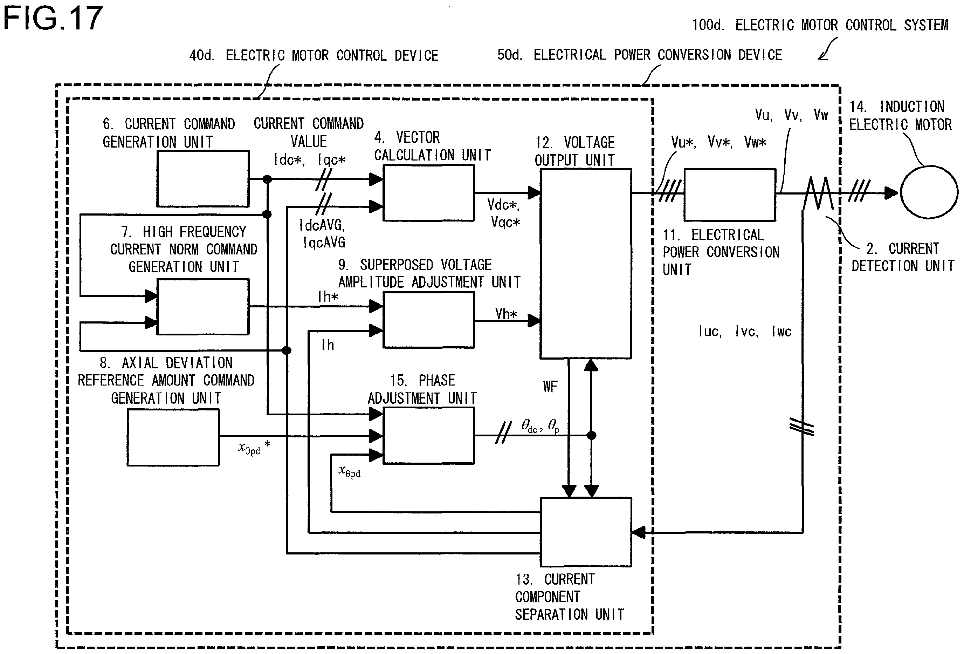

Fig. 17 is an overall structural figure for an electric motor control system 100d according to the fourth embodiment of the present invention. This fourth embodiment is one in which the second embodiment and the third embodiment described above are combined. This electric motor control system 100d includes an electrical power conversion device 50d and an induction electric motor 14. The electrical power conversion device 50d includes an electric motor control device 40d, an electrical power conversion unit 11, and a current detection unit 2. The electric motor control device 40d, along with including a voltage output unit 12 and a current component separation unit 13 of the same types as those explained above in connection with the second embodiment, also includes a phase adjustment unit 15 of the same type as that explained above in connection with the third embodiment. The other features are the same as in the case of the electric motor control device 40a explained in connection with the first embodiment.

The above described embodiments are examples, and various modifications can be made without departing from the scope of the invention, as defined in the appended claims.

**Claims**

1.  An electrical power conversion device, comprising:

an electrical power conversion means (11) for converting DC electrical power into AC electrical power and supplying the AC electrical power to an AC electric motor (1; 14);
a voltage output means (3; 12) for superposing, on a fundamental voltage command value (Vdc*, Vqc*) for operating the AC electric motor (1; 14) corresponding to a predetermined operating frequency, an alternating voltage at high frequency that changes cyclically at a predetermined frequency higher than the predetermined operating frequency, and for outputting a result of the superposing to the electrical power conversion means (11) as a voltage command value (Vu*, Vv*, Vw*) for commanding a voltage of the AC electrical power;
a current detection means (2) for detecting a current (Iuc, Ivc, Iwc) of the AC electrical power;
a high frequency component extraction means (5c; 13c) for extracting from the current (Iuc, Ivc, Iwc) of the AC electrical power detected by the current detection means (2), as a high frequency current component (ΔIdc, ΔIqc), an amount of change due to the alternating voltage of a fundamental wave current component corresponding to the fundamental voltage command value (Vdc*, Vqc*);
a norm calculation means (5f; 13f) for obtaining a high frequency current norm that represents a magnitude of the high frequency current component extracted by the high frequency component extraction means (5c; 13c); and
a superposed voltage amplitude adjustment means (9) for obtaining a superposed voltage amplitude command value (Vh*) for adjusting an amplitude of the alternating voltage based on the high frequency current norm (Ih) obtained by the norm calculation means (5f; 13f), and for outputting the superposed voltage amplitude command value (Vh*) to the voltage output means (3; 12);
**characterized by**
a high frequency current norm command generation unit (7) for receiving current command values (Idc*, Iqc*) from a current command generation unit (6) and fundamental wave current components (IdcAVG, IqcAVG) from a current component separation unit (5), wherein
the high frequency current norm command generation unit (7) includes a first selection switch (7a), the first selection switch (7a) configured to receive the current command values (Idc*, Iqc*) and the fundamental wave current components (IdcAVG, IqcAVG), a norm of the current command vector and a norm of the fundamental wave current vector, and further configured to output at least one of the inputted values or a combination thereof, and
a second selection switch (7e) configured to receive a value that is based on the output of the first selection switch (7a), to receive a predefined high frequency current norm command value (Ih0*), and to output to the superposed voltage amplitude adjustment means (9) as a high frequency current norm command value (Ih*) either the predefined high frequency current norm command value (Ih0*) or a command value which is derived from combining the output values of the first selection switch (7a).

2. An electrical power conversion device according to Claim 1, further comprising:

an axial deviation reference amount calculation means (5e; 13e) for obtaining an axial deviation reference amount ($x_{\theta pd}$*) carresponding to a magnetic pole position of the AC electric motor (1; 14) based on the high frequency current component ($\Delta$Idc, $\Delta$Iqc) that has been extracted by the high frequency component extraction means (5c; 13c); and
an estimation means for estimating the magnetic pole position of the AC electric motor (1; 14) based on the axial deviation reference amount (x*) that has been obtained by the axial deviation reference amount calculation means (5e; 13e).

3. An electrical power conversion device according to Claim 1 or Claim 2, further comprising:

a fundamental wave component extraction means (5b; 13b) for extracting the fundamental wave current component (IdcAVG, IqcAVG) from the current (Iuc, Ivc, Iwc) of the AC electrical power detected by the current detection means (2);
a current command generation means (6) for generating the first current command value (Idc*) and the second current command value (Idc*) that respectively correspond to an excitation current component and to a torque current component of the current of the AC electrical power supplied by the electrical power conversion means (11) to the AC electric motor (1; 14); and
a vector calculation means (4) for calculating, based on the fundamental wave current component (IdcAVG, IqcAVG) extracted by the fundamental wave component extraction means (5b; 13b) and the first current command value (Idc*) and the second current command value (Iqc*) generated by the current command generation means (6), the fundamental voltage command value (Vdc*, Vqc*) at a predetermined control response speed corresponding to the predetermined operating frequency, and for outputting the fundamental voltage command value (Vdc*, Vqc*) to the voltage output means (3; 12).

4. An electrical power conversion device according to Claim 3, wherein the superposed voltage amplitude adjustment means (9) obtains the superposed voltage amplitude command value (Vh*) so that the high frequency current norm (Ih) agrees with the high frequency current norm command value (Ih*), and outputs the superposed voltage amplitude command value (Vh*) to the voltage output means (3; 12).

5. An electric motor control system, comprising:

an electrical power conversion device (50a; 50b; 50c; 50d) according to any one of Claims 1 through 4; and
the AC electric motor (1; 14).

**Patentansprüche**

1. Vorrichtung zum Umsetzen elektrischer Leistung, die Folgendes umfasst:

Mittel zum Umsetzen elektrischer Leistung (11), um elektrische Gleichstromleistung in elektrische Wechselstromleistung umzusetzen und um die elektrische Wechselstromleistung an einen elektrischen Wechselstrommotor (1; 14) zu liefern;

Spannungsausgabemittel (3; 12) zum Überlagern auf einen Primärspannungsanweisungswert (Vdc*, Vqc*) zum Betreiben des elektrischen Wechselstrommotors (1; 14) entsprechend einer vorgegebenen Betriebsfrequenz einer Wechselspannung bei einer hohen Frequenz, die sich zyklisch mit einer vorgegebenen Frequenz ändert, die größer als die vorgegebene Betriebsfrequenz ist, und zum Ausgeben eines Ergebnisses der Überlagerung an die Mittel zum Umsetzen elektrischer Leistung (11) als einen Spannungsanweisungswert (Vu*, Vv*, Vw*) zum Anweisen einer Spannung der elektrischen Wechselstromleistung;

Stromdetektionsmittel (2) zum Detektieren eines Stroms (Iuc, Ivc, Iwc) der elektrischen Wechselstromleistung;

Mittel zum Extrahieren einer Hochfrequenzkomponente (5c; 13c) zum Extrahieren aus dem durch die Stromdetektionsmittel (2) detektierten Strom (Iuc, Ivc, Iwc) der elektrischen Wechselstromleistung eines Änderungsbetrags als eine Hochfrequenzstromkomponente ($\Delta$Idc, $\Delta$Iqc) aufgrund der Wechselspannung einer Grundwellenstromkomponente, die dem Primärspannungsanweisungswert (Vdc*, Vqc*) entspricht;

Normberechnungsmittel (5f; 13f) zum Erhalten einer Hochfrequenzstromnorm, die eine Größe der durch die Mittel zum Extrahieren der Hochfrequenzkomponente (5c; 13c) extrahierten Hochfrequenzstromkomponente repräsentiert; und

Mittel zum Anpassen der Größe der überlagerten Spannung (9) zum Erhalten eines Anweisungswerts der Größe der überlagerten Spannung (Vh*) zum Anpassen einer Größe der Wechselspannung anhand der Hochfrequenzstromnorm (Ih), die durch die Normberechnungsmittel (5f; 13f) erhalten wurde, und zum Ausgeben des Anweisungswerts der Größe der überlagerten Spannung (Vh*) an die Spannungsausgabemittel (3; 12);
**gekennzeichnet durch**

eine Hochfrequenzstromnormanweisungs-Erzeugungseinheit (7) zum Empfangen von Stromanweisungswerten (Idc*, Iqc*) von einer Stromanweisungserzeugungseinheit (6) und Grundwellenstromkomponenten (IdcAVG, IqcAVG) von einer Stromkomponententrenneinheit (5), wobei

die Hochfrequenzstromnormanweisungs-Erzeugungseinheit (7) einen ersten Auswahlschalter (7a) enthält, wobei der erste Auswahlschalter (7a) konfiguriert ist, die Stromanweisungswerte (Idc*, Iqc*) und die Grundwellenstromkomponenten (IdcAVG, IqcAVG), eine Norm des Stromanweisungsvektors und eine Norm des Grundwellenstromvektors zu empfangen, und ferner konfiguriert ist, mindestens einen der eingegebenen Werte oder eine Kombination von ihnen auszugeben, und

einen zweiten Auswahlschalter (7e), der konfiguriert ist, einen Wert zu empfangen, der auf der Ausgabe des ersten Auswahlschalters (7a) beruht, um einen vordefinierten Hochfrequenzstromnormanweisungswert (Ih0*) zu empfangen und an die Mittel zum Anpassen der Größe der überlagerten Spannung (9) als einen Hochfrequenzstromnormanweisungswert (Ih*) entweder den vordefinierten Hochfrequenzstromnormanweisungswert (Ih0*) oder einen Anweisungswert, der vom Kombinieren der Ausgabewerte des ersten Auswahlschalters (7a) abgeleitet ist, auszugeben.

2. Vorrichtung zum Umsetzen elektrischer Leistung nach Anspruch 1, die ferner umfasst:

Mittel zum Berechnen eines Referenzbetrags einer axialen Abweichung (x$_{\theta pd}$*), der einer Magnetpolposition des elektrischen Wechselstrommotors (1; 14) entspricht, anhand der Hochfrequenzstromkomponente ($\Delta$Idc, $\Delta$Iqc), die durch die Mittel zum Extrahieren der Hochfrequenzkomponente (5c; 13c) extrahiert wurde; und
Schätzmittel zum Schätzen der Magnetpolposition des elektrischen Wechselstrommotors (1; 14) anhand des Referenzbetrags der axialen Abweichung (x$_{\theta pd}$*), der durch die Mittel zum Berechnen des Referenzbetrags der axialen Abweichung (5e; 13e) erhalten wurde.

3. Vorrichtung zum Umsetzen elektrischer Leistung nach Anspruch 1 oder Anspruch 2, die ferner umfasst:

Mittel zum Extrahieren einer Grundwellenkomponente (5b; 13b) zum Extrahieren der Grundwellenstromkomponente (IdcAVG, IqcAVG) aus dem durch die Stromdetektionsmittel (2) detektierten Strom (Iuc, Ivc, Iwc) der elektrischen Wechselstromleistung;
Stromanweisungserzeugungsmittel (6) zum Erzeugen des ersten Stromanweisungswerts (Idc*) und des zweiten Stromanweisungswerts (Idc*), die jeweils einer Anregungsstromkomponente und einer Drehmomentstromkomponente des durch die Mittel zum Umsetzen elektrischer Leistung (11) an den elektrischen Wechselstrommotor (1; 14) gelieferten Stroms entsprechen; und
Vektorberechnungsmittel (4) zum Berechnen anhand der durch die Mittel zum Extrahieren der Grundwellenkomponente (5b; 13b) extrahierten Grundwellenstromkomponente (IdcAVG, IqcAVG) und des ersten Stromanweisungswerts (Idc*) und des zweiten Stromanweisungswerts (Iqc*), die durch die Stromanweisungserzeugungsmittel (6) erzeugt wurden, des Primärspannungsanweisungswerts (Vdc*, Vqc*) mit einer vorgegebenen Steuerreaktionsgeschwindigkeit, die der vorgegebenen Betriebsfrequenz entspricht, und zum Ausgeben des Primärspannungsanweisungswerts (Vdc*, Vqc*) an die Spannungsausgabemittel (3;12).

4. Vorrichtung zum Umsetzen elektrischer Leistung nach Anspruch 3, wobei

die Mittel zum Anpassen der Größe der überlagerten Spannung (9) den Anweisungswert der Größe der überlagerten Spannung (Vh*) erhalten, so dass die Hochfrequenzstromnorm (Ih) mit dem Hochfrequenznormanweisungswert (Ih*) übereinstimmt, und den Anweisungswert der Größe der überlagerten Spannung (Vh*) an die Spannungsausgabemittel (3; 12) ausgeben.

5. System zum Steuern eines elektrischen Motors, das Folgendes umfasst:

eine Vorrichtung zum Umsetzen elektrischer Leistung (50a; 50b; 50c; 50d) gemäß einem der Ansprüche 1 bis 4; und
den elektrischen Wechselstrommotor (1; 14).

# Revendications

1. Dispositif de conversion de puissance électrique, comprenant :

un moyen de conversion de puissance électrique (11) permettant de convertir une puissance électrique en courant continu (DC) en une puissance électrique en courant alternatif (AC), et de fournir la puissance électrique AC à un moteur AC (1 ; 14) ;
un moyen de sortie de tension (3 ; 12) permettant de superposer, sur une valeur de commande de tension fondamentale (Vdc*, Vqc*) pour faire fonctionner le moteur électrique AC (1 ; 14) en correspondance d'une fréquence de fonctionnement prédéterminée, une tension alternative à haute fréquence qui change de manière cyclique à une fréquence prédéterminée supérieure à la fréquence de fonctionnement prédéterminée, et de sortir un résultat de la superposition vers le moyen de conversion de puissance électrique (11) comme valeur de commande de la tension (Vu*, Vv*, Vw*) pour commander une tension de puissance électrique AC ;
un moyen de détection de courant (2) permettant de détecter un courant (Iuc, Ivc, Iwc) de la puissance électrique AC ;
un moyen d'extraction de composante à haute fréquence (5c; 13c) permettant d'extraire, à partir du courant (Iuc, Ivc, Iwc) de la puissance électrique AC détectée par le moyen de détection de courant (2) comme composante de courant à haute fréquence (ΔIdc, ΔIqc), une quantité de changement résultant de la tension alternative d'une composante de courant d'onde fondamentale en correspondance de la valeur de commande de tension fondamentale (Vdc*, Vqc*) ;
un moyen de calcul de norme (5f ; 13f) permettant d'obtenir une norme de courant à haute fréquence qui représente une grandeur de la composante de courant à haute fréquence extraite par le moyen d'extraction de composante à haute fréquence (5c ; 13c) ; et
un moyen d'ajustement de l'amplitude de la tension superposée (9) permettant d'obtenir une valeur de commande de l'amplitude de la tension superposée (Vh*), pour ajuster une amplitude de la tension alternative basée sur la norme de courant à haute fréquence (Ih) obtenue par le moyen de calcul de norme (5f ; 13f), et pour sortir la valeur de commande de l'amplitude de la tension superposée (Vh*) vers le moyen de sortie de tension (3 ; 12) ;
**caractérisé par**
une unité de génération de commande de norme de courant à haute fréquence (7) permettant de recevoir des valeurs de commande de courant (Idc*, Iqc*) depuis une unité de génération de commande de courant (6), et des composantes de courant d'onde fondamentales (IdcAVG, IqcAVG) depuis une unité de séparation de composantes de courant (5), dans lequel l'unité de génération de commande de norme de courant à haute fréquence (7) inclut un premier commutateur de sélection (7a), le premier commutateur de sélection (7a) étant configuré de manière à recevoir les valeurs de commande de courant (Idc*, Iqc*) et les composantes de courant d'onde fondamentales (IdcAVG, IqcAVG), une norme du vecteur de commande de courant et une norme du vecteur de courant d'onde fondamental, et configuré en outre de manière à sortir au moins l'une des valeurs entrées ou une combinaison de celles-ci, et
un deuxième commutateur de sélection (7e) configuré de manière à recevoir une valeur qui est basée sur la sortie du premier commutateur de sélection (7a), à recevoir une valeur de commande de norme de courant à haute fréquence (Ih0*) prédéfinie, et à sortir vers le moyen d'ajustement de l'amplitude de la tension superposée (9) comme valeur de commande de norme de courant à haute fréquence (Ih*) soit la valeur de commande de norme de courant à haute fréquence prédéfinie (Ih0*), soit une valeur de commande qui est dérivée de la combinaison des valeurs de sortie du premier commutateur de sélection (7a).

2.  Dispositif de conversion de puissance électrique selon la revendication 1, comprenant en outre :

un moyen de calcul de la quantité de référence de déviation axiale (5e ; 13e) permettant d'obtenir une quantité de référence de déviation axiale ($x_{\theta pd}$*) correspondant à une position de pole magnétique du moteur électrique AC (1 ; 14) sur la base de la composante de courant à haute fréquence ($\Delta$Idc, $\Delta$Iqc) qui a été extraite par le moyen d'extraction de composante à haute fréquence (5c ; 13c) ; et
un moyen d'estimation permettant d'estimer la position de pole magnétique du moteur électrique AC (1 ; 14) sur la base de la quantité de référence de déviation axiale ($x_{\theta pd}$*) qui a été obtenue par le moyen de calcul de la quantité de référence de déviation axiale (5e ; 13e).

3.  Dispositif de conversion de puissance électrique selon la revendication 1 ou 2, comprenant en outre :

un moyen d'extraction de composante de courant d'onde fondamentale (5b; 13b) permettant d'extraire la composante de courant d'onde fondamentale (IdcAVG, IqcAVG) à partir du courant (Iuc, Ivc, Iwc) de la puissance électrique AC détectée par le moyen de détection de courant (2) ;
un moyen de génération de commande de courant (6) permettant de générer la première valeur de commande de courant (Idc*) et la deuxième valeur de commande de courant (Iqc*) qui correspondent respectivement à une composante de courant d'excitation et à une composante de courant de couple du courant de la puissance électrique AC fournies par le moyen de conversion de puissance électrique (11) au moteur électrique AC (1 ; 14) ; et
un moyen de calcul de vecteur (4) permettant de calculer, sur la base de la composante de courant d'onde fondamentale (IdcAVG, IqcAVG) extraite par le moyen d'extraction de composante d'onde fondamentale (5b ; 13b) et de la première valeur de commande de courant (Idc*) et de la deuxième valeur de commande de courant (Iqc*) générées par le moyen de génération de commande de courant (6), la valeur de commande de tension fondamentale (Vdc*, Vqc*) à une vitesse de réponse de commande prédéterminée correspondant à la fréquence de fonctionnement prédéterminée, et permettant de sortir la valeur de commande de tension fondamentale (Vdc*, Vqc*) vers le moyen de sortie de tension (3 ; 12).

4.  Dispositif de conversion de puissance électrique selon la revendication 3, dans lequel le moyen d'ajustement de l'amplitude de la tension superposée (9) obtient la valeur de commande de l'amplitude de la tension superposée (Vh*) de manière à ce que la norme de courant à haute fréquence (Ih) soit conforme avec la valeur de commande de norme de courant à haute fréquence (Ih*), et sorte la valeur de commande de l'amplitude de la tension superposée (Vh*) vers le moyen de sortie de tension (3 ; 12).

5.  Système de commande de moteur électrique, comprenant :

un dispositif de conversion de puissance électrique (50a ; 50b ; 50c ; 50d) selon l'une quelconque des revendications 1 à 4 ; et
le moteur électrique AC (1 ; 14).

# FIG.1

**40a. ELECTRIC MOTOR CONTROL DEVICE**

**50a. ELECTRICAL POWER CONVERSION DEVICE**

**100a. ELECTRIC MOTOR CONTROL SYSTEM**

**6. CURRENT COMMAND GENERATION UNIT**

CURRENT COMMAND VALUE
$Idc*$, $Iqc*$

**4. VECTOR CALCULATION UNIT**

**3. VOLTAGE OUTPUT UNIT**

$Vu*$, $Vv*$, $Vw*$

$Vu$, $Vv$, $Vw$

**1. ELECTRIC MOTOR**

$Vdc*$, $Vqc*$

$IdcAVG$, $IqcAVG$

**7. HIGH FREQUENCY CURRENT NORM COMMAND GENERATION UNIT**

**11. ELECTRICAL POWER CONVERSION UNIT**

**2. CURRENT DETECTOR**

**9. SUPERPOSED VOLTAGE AMPLITUDE ADJUSTMENT UNIT**

$Ih*$

$Ih$

$Vh*$

$Iuc$, $Ivc$, $Iwc$

**8. AXIAL DEVIATION REFERENCE AMOUNT COMMAND GENERATION UNIT**

$WF$

**10. PHASE ADJUSTMENT UNIT**

$x_{\theta pd}*$

$x_{\theta pd}$

$\theta_{dc}$, $\theta_p$

**5. CURRENT COMPONENT SEPARATION UNIT**

# FIG.2

b

q

qc

p (AXIS OF SUPERPOSITION)

$\theta_{ivh}$

$\theta_{pd}$

dc (ESTIMATED PHASE OF POLE POSITION)

z

$\theta_p$

$\Delta\theta$   d (ROTOR POLE POSITION)

$\theta_{dc}$

$\theta_d$

HIGH FREQUENCY VOLTAGE

a (STATOR POSITION)

$\arctan\left(\dfrac{\Delta I_{qcAVG}}{\Delta I_{dcAVG}}\right)$

HIGH FREQUENCY CURRENT

EP 2 515 431 B1

# FIG.3

3. VOLTAGE OUTPUT UNIT

3g. TWO PHASE
– THREE PHASE
CONVERSION UNIT

3e. COORDINATE
CONVERSION UNIT

Vdc*, Vqc*

$R(\bullet)$

+
+

Vu*, Vv*, Vw*

3f. ADDER

3a. ALTERNATING VOLTAGE
WAVEFORM GENERATION UNIT

1

−1

3b

3c

Vh*

Vph*, Vzh*

0

$R(\bullet)$

3d. COORDINATE
CONVERSION UNIT

$\theta_p$

$\theta_{dc}$

WF

$\theta_{dc}$, $\theta_p$

EP 2 515 431 B1

# FIG.4

5. CURRENT COMPONENT SEPARATION UNIT

$\theta_{dc}$, $\theta_{p}$   WF

5e. AXIAL DEVIATION REFERENCE AMOUNT CALCULATION UNIT

5d. SIGN CORRECTION UNIT

$Idc$, $Iqc$

$x_{\theta pd}$

Iuc, Ivc, Iwc

$\Delta I_{dc}$, $\Delta I_{qc}$

$\dfrac{1}{Z}$

5a. COORDINATE CONVERSION UNIT

5c. HIGH FREQUENCY COMPONENT EXTRACTION UNIT

$Ih$

$\Delta I_{dcAVG}$, $\Delta I_{qcAVG}$

5f. NORM CALCULATION UNIT

$IdcAVG$, $IqcAVG$

5b. FUNDAMENTAL WAVE COMPONENT EXTRACTION UNIT

EP 2 515 431 B1

EP 2 515 431 B1

FIG. 5A

FIG. 5B

Vph*

Vh*

time

FIG. 5C

Idc

DETECTION POINT

IdcAVG

time

FIG. 5D

$\Delta I_{dc}$

time

FIG. 5E

+1

−1

time

FIG. 5F

time

24

FIG.6

# FIG.7

10. PHASE ADJUSTMENT UNIT

$$\frac{1}{Z}$$

10c. SELECTION SWITCH

$x_{\theta pd}$ *

$x_{\theta pd}$

$-\left(K_P + \dfrac{K_I}{S}\right)\dfrac{1}{S}$

10a. FIRST PHASE ADJUSTMENT UNIT

$\Delta\theta$

$\left(K_P + \dfrac{K_I}{S}\right)\dfrac{1}{S}$

10b. SECOND PHASE ADJUSTMENT UNIT

$A_0$

$a_0$

$\theta_{dc}$

$B_0$

$\theta_{dc}, \theta_p$

$\theta_p$

EP 2 515 431 B1

FIG.8

7. HIGH FREQUENCY CURRENT NORM COMMAND GENERATION UNIT

7a. SELECTION SWITCH

7b. TABLE

7d

7e. SELECTION SWITCH

7c. GAIN

Merge

$Idc*$

$Iqc*$

$Idc*, Iqc*$

$\sqrt{I_{dc}^{*2} + I_{qc}^{*2}}$

$IdcAVG$

$IqcAVG$

$IdcAVG, IqcAVG$

$\sqrt{I_{dcAVG}^{2} + I_{qcAVG}^{2}}$

$I_{h0}^{*}$

$Ih*$

$A_1$ $B_1$ $C_1$ $D_1$ $E_1$ $F_1$ $a_1$ $b_1$ $A_2$ $B_2$ $a_2$

EP 2 515 431 B1

# FIG.9

9. SUPERPOSED VOLTAGE
AMPLITUDE ADJUSTMENT UNIT

9a. SUPERPOSED VOLTAGE
AMPLITUDE CONTROL UNIT

9b. LIMITER

$$K_P + \frac{K_I}{S}$$

Ih*

Ih

Vh*

EVENT
FLAG

EP 2 515 431 B1

# FIG.10

FIG. 11A

CURRENT

60a. OC LEVEL

60e. CURRENT WAVEFORM

60d. CURRENT
FUNDAMENTAL WAVE
COMPONENT

Ih LARGE

60c

60b

Ih SMALL

time

FIG. 11B

CURRENT

61a. OC LEVEL

time

61b

Ih SMALL

Ih SMALL

61c

# FIG.12

FIG.12 — Block diagram of electric motor control system (100b. ELECTRIC MOTOR CONTROL SYSTEM) including 40b. ELECTRIC MOTOR CONTROL DEVICE, 50b. ELECTRICAL POWER CONVERSION DEVICE, 1. ELECTRIC MOTOR, 2. CURRENT DETECTION UNIT. Internal blocks: 6. CURRENT COMMAND GENERATION UNIT, 4. VECTOR CALCULATION UNIT, 12. VOLTAGE OUTPUT UNIT, 11. ELECTRICAL POWER CONVERSION UNIT, 7. HIGH FREQUENCY CURRENT NORM COMMAND GENERATION UNIT, 9. SUPERPOSED VOLTAGE AMPLITUDE ADJUSTMENT UNIT, 8. AXIAL DEVIATION REFERENCE AMOUNT COMMAND GENERATION UNIT, 10. PHASE ADJUSTMENT UNIT, 13. CURRENT COMPONENT SEPARATION UNIT. Signals: CURRENT COMMAND VALUE $Idc*, Iqc*$; $IdcAVG, IqcAVG$; $Vdc*, Vqc*$; $Vu*, Vv*, Vw*$; $Vu, Vv, Vw$; $Ih*$; $Ih$; $Vh*$; $Iuc, Ivc, Iwc$; WF; $x_{\theta pd}*$; $x_{\theta pd}$; $\theta_{dc}, \theta_p$.

EP 2 515 431 B1

# FIG.13

12. VOLTAGE OUTPUT UNIT

12e. COORDINATE CONVERSION UNIT

12g. TWO PHASE – THREE PHASE CONVERSION UNIT

$R(\bullet)$

$Vdc*$, $Vqc*$

$Vu*$, $Vv*$, $Vw*$

12f. ADDER

12a. ALTERNATING VOLTAGE WAVEFORM GENERATION UNIT

12b

12c

$Vph*$, $Vzh*$

$Vh*$

$R(\bullet)$

0

12d. COORDINATE CONVERSION UNIT

$\theta_p$

$\theta_{dc}$

WF

$\theta_{dc}$, $\theta_p$

EP 2 515 431 B1

# FIG.14

$\theta_{dc}, \theta_p$  WF  13. CURRENT COMPONENT SEPARATION UNIT

13e. AXIAL DEVIATION REFERENCE AMOUNT CALCULATION UNIT

13d. AMPLITUDE CALCULATION UNIT

$Idc, Iqc$

$x_{\theta pd}$

BPF

Iuc, Ivc, Iwc

$\Delta I_{dc}, \Delta I_{qc}$

13c. HIGH FREQUENCY COMPONENT EXTRACTION UNIT

13a. COORDINATE CONVERSION UNIT

$Ih$

$\Delta I_{dcAVG}, \Delta I_{qcAVG}$

13f. NORM CALCULATION UNIT

$IdcAVG, IqcAVG$

LPF

13b. FUNDAMENTAL WAVE COMPONENT EXTRACTION UNIT

EP 2 515 431 B1

# FIG.15

100c. ELECTRIC MOTOR CONTROL SYSTEM

40c. ELECTRIC MOTOR CONTROL DEVICE

50c. ELECTRICAL POWER CONVERSION DEVICE

6. CURRENT COMMAND GENERATION UNIT

CURRENT COMMAND VALUE
Idc*, Iqc*

4. VECTOR CALCULATION UNIT

3. VOLTAGE OUTPUT UNIT

Vu*, Vv*, Vw*

Vu, Vv, Vw

14. INDUCTION ELECTRIC MOTOR

7. HIGH FREQUENCY CURRENT NORM COMMAND GENERATION UNIT

IdcAVG, IqcAVG

Vdc*, Vqc*

11. ELECTRICAL POWER CONVERSION UNIT

2. CURRENT DETECTION UNIT

9. SUPERPOSED VOLTAGE AMPLITUDE ADJUSTMENT UNIT

Ih*

Vh*

Ih

8. AXIAL DEVIATION REFERENCE AMOUNT COMMAND GENERATION UNIT

Iuc, Ivc, Iwc

15. PHASE ADJUSTMENT UNIT

WF

$\theta_{dc}$, $\theta_p$

$x_{\theta pd}$*

$x_{\theta pd}$

5. CURRENT COMPONENT SEPARATION UNIT

EP 2 515 431 B1

# FIG.16

15. PHASE ADJUSTMENT UNIT

15d. SLIPPAGE COMPENSATION AMOUNT CALCULATION UNIT

$Idc^*, Iqc^*$

$\omega_S^*$

15c. INTEGRATOR

$x_{\theta pd}^*$

$-\left(K_P + \dfrac{K_I}{S}\right)\dfrac{1}{S}$

15a. FIRST PHASE ADJUSTMENT UNIT

$\Delta\theta$

$K_P + \dfrac{K_I}{S}$

$\omega r^\wedge$

$\omega_1^*$

$\dfrac{1}{S}$

$\theta_{dc}$

15b. SECOND PHASE ADJUSTMENT UNIT

$\dfrac{1}{Z}$

$x_{\theta pd}$

$\theta_{dc}, \theta_p$

$\theta_p$

EP 2 515 431 B1

FIG.17

40d. ELECTRIC MOTOR CONTROL DEVICE          50d. ELECTRICAL POWER CONVERSION DEVICE

6. CURRENT COMMAND GENERATION UNIT

CURRENT COMMAND VALUE
Idc*, Iqc*

4. VECTOR CALCULATION UNIT

12. VOLTAGE OUTPUT UNIT

Vu*, Vv*, Vw*

Vu, Vv, Vw

14. INDUCTION ELECTRIC MOTOR

Vdc*, Vqc*

IdcAVG, IqcAVG

7. HIGH FREQUENCY CURRENT NORM COMMAND GENERATION UNIT

11. ELECTRICAL POWER CONVERSION UNIT

2. CURRENT DETECTION UNIT

9. SUPERPOSED VOLTAGE AMPLITUDE ADJUSTMENT UNIT

Ih*

Vh*

Iuc, Ivc, Iwc

Ih

8. AXIAL DEVIATION REFERENCE AMOUNT COMMAND GENERATION UNIT

15. PHASE ADJUSTMENT UNIT

WF

$x_{\theta pd}$*

$\theta_{dc}$, $\theta_p$

$x_{\theta pd}$

13. CURRENT COMPONENT SEPARATION UNIT

EP 2 515 431 B1

## REFERENCES CITED IN THE DESCRIPTION

**Patent documents cited in the description**

- JP 3312472 B
- JP 2002078392 A
- JP 2010154597 A
- JP 2010154598 A
- JP 2008125260 A
- EP 1492224 A1